## Europäisches Patentamt
## European Patent Office
## Office européen des brevets

(19)

(11) **EP 0 478 442 B1**

(12)
# FASCICULE DE BREVET EUROPEEN

(45) Date de publication et mention
de la délivrance du brevet:
**10.12.1997 Bulletin 1997/50**

(51) Int Cl.6: **G06K 9/46**, A61B 5/117

(21) Numéro de dépôt: **91402540.8**

(22) Date de dépôt: **24.09.1991**

(54) **Dispositif de traitement de l'image d'une empreinte digitale**

Fingerabdruckbildverarbeitungsvorrichtung

Fingerprint image processing device

(84) Etats contractants désignés:
**DE GB**

(30) Priorité: **26.09.1990 FR 9011883**

(43) Date de publication de la demande:
**01.04.1992 Bulletin 1992/14**

(73) Titulaire: **FRANCE TELECOM**
**75015 Paris (FR)**

(72) Inventeur: **André, Catherine**
**F-14000 Caen (FR)**

(74) Mandataire: **Plaçais, Jean-Yves et al**
**Cabinet Netter,**
**40, rue Vignon**
**75009 Paris (FR)**

(56) Documents cités:
**EP-A- 0 339 527**

- **IAPR WORKSHOP ON COMPUTER VISION - SPECIAL HARDWARE AND INDUSTRIAL APPLICATIONS, 12- 14 OCT.,1988, TOKYO , JP pages 120 - 123; R. RETTER ET AL.: 'BIOMAC, A VERSATILE BIOMETRIC VERIFICATION MACHINE FOR ACCESS CONTROL'**

## Description

L'invention concerne le traitement de l'image d'une surface en relief. Cette image comporte des zones de coloration différentes représentant les creux et les saillies (ou crêtes) de la surface en relief.

L'invention trouve une application particulièrement avantageuse dans le traitement de l'image d'une empreinte digitale, notamment à des fins d'authentification de ladite empreinte.

Une empreinte digitale peut généralement être divisée en trois régions. Une première région, ou région centrale, est particulièrement caractéristique de l'empreinte car les crêtes de l'empreinte situées à l'intérieur de cette région présentent des orientations générales extrêmement variées et permettent plus aisément de distinguer une empreinte d'une autre.

Une deuxième région, ou région basale, se situe entre la région centrale et le pli de flexion de la phalange supportant l'empreinte. Cette région basale est constituée de crêtes quasi-rectilignes, et, en raison de sa position au voisinage d'une extrémité de l'empreinte, sa trace sur une image de l'empreinte est généralement dégradée et ne permet pas une authentification certaine de l'empreinte.

La troisième région, ou région périphérique, située entre la région centrale et l'extrémité de la phalange, comporte un empilement de crêtes entourant au moins en partie la région centrale et formant globalement un U. Là encore les traces des bords de cette région sur une image de l'empreinte sont généralement dégradées et peuvent entraver une authentification certaine de cette dernière.

Aussi est-il particulièrement avantageux de prévoir un dispositif de traitement de l'image de l'empreinte capable de localiser une zone particulière de la région centrale riche en informations caractéristiques. La localisation de cette zone particulière revient à localiser le fond interne du U ci-dessus mentionné.

De nombreuses recherches ont déjà été menées dans ce domaine (article de Renaud REITTER et al, intitulé " Biomac, a versatile biometric verification machine for access control " et présenté en 1988 à TOKYO au congrès " IAPR WORKSHOP ON COMPUTER VISION"; article de Catherine ANDRE et al, intitulé " fingerprint verification for access control in the case of multi-biometric verification " et présenté au Congrès "IEEE International Conference on Image Processing" (ICIP'89) à SINGAPOUR en 1989).

Elles ont abouti à un dispositif de traitement de l'image d'une empreinte digitale comportant :

- des moyens d'analyse propres à analyser l'image selon des zones élémentaires et associer un pixel à chaque zone élémentaire,

- des moyens de conversion propres à regrouper les pixels par groupes correspondant respectivement à des domaines de l'image couvrant plusieurs zones élémentaires voisines et formant un quadrillage de l'image selon deux directions d'observation orthogonales, et à convertir, par comparaison à un seuil, chaque groupe de pixels en un groupe de données binaires primaires,

- des moyens de prétraitement propres à affecter à chaque groupe de données primaires, une valeur numérique représentative de l'orientation générale des crêtes de l'empreinte contenues dans le domaine correspondant par rapport aux directions d'observation, et établir ainsi une table de valeurs numériques,

- des premiers moyens de traitement propres à déterminer, au sein dudit quadrillage, le rang d'une première ligne de domaines parallèle à la première direction d'observation, et possédant le nombre maximum de domaines dont les valeurs numériques correspondantes sont représentatives d'une orientation générale de crêtes sensiblement parallèle à la deuxième direction d'observation,

- des deuxièmes moyens de traitement propres à déterminer au sein dudit quadrillage, le rang d'une deuxième ligne de domaines parallèle à la deuxième direction d'observation, et possédant le nombre maximum de domaines dont les valeurs numériques correspondantes sont représentatives d'une orientation générale de crêtes sensiblement parallèle à la première direction d'observation, ainsi que

- des troisièmes moyens de traitement propres à extraire de ladite table de valeurs numériques, la valeur numérique particulière correspondant au domaine appartenant à la fois auxdites première et deuxième lignes, ce qui est équivalent à la localisation du fond interne dudit U.

Bien que fournissant des résultats intéressants, un tel dispositif ne donne pas entière satisfaction et ne permet pas, notamment, une localisation certaine du fond interne du U quelles que soient les variations d'aspects des régions de l'empreinte qui peuvent exister d'une empreinte à l'autre.

L'invention vise à apporter une solution à ce problème.

A partir d'un dispositif de traitement du type de celui décrit ci-dessus, l'invention est remarquable en ce sens que les deuxièmes moyens de traitement comprennent :

des premiers moyens de sélection, au sein de ladite table de valeurs numériques, d'un premier bloc de valeurs numériques associées à un nombre prédéterminé de lignes de domaines de rangs successifs parallèles à la première direction d'observation et incluant ladite première ligne de domaines, et

des moyens propres à établir un rapport entre, d'une part, le nombre de valeurs numériques dudit premier bloc correspondant à une orientation générale de crêtes sensiblement parallèle à la deuxième direction d'observation, et d'autre part, le nombre de valeurs numériques de ce premier bloc correspondant à une orientation générale de crêtes sensiblement parallèle à la première direction d'observation, et à comparer ledit rapport à une valeur de référence prédéterminée, reliée à un critère de discrimination de deux catégories générales d'empreintes prédéterminé, ce qui permet une pré-classification de l'empreinte ainsi traitée parmi ces deux catégories générales d'empreintes.

Très avantageusement, le critère de discrimination de deux catégories générales d'empreintes porte sur le rapport de la plus grande dimension de la région centrale à la plus grande dimension de l'empreinte totale.

Ainsi, par exemple, la première catégorie d'empreintes comprend les empreintes dont la plus grande dimension de la région centrale est supérieure à sensiblement le tiers de la plus grande dimension de l'empreinte totale, tandis que la deuxième catégorie d'empreintes comprend les empreintes dont la plus grande dimension de la région centrale est inférieure ou égale à sensiblement le tiers de la plus grande dimension de l'empreinte totale.

Aussi une empreinte dont ledit rapport est inférieur à ladite valeur de référence prédéterminée appartient à ladite première catégorie, tandis qu'une empreinte dont ledit rapport est supérieur ou égal à ladite valeur de référence prédéterminée appartient à ladite deuxième catégorie, et ladite valeur de référence prédéterminée est de l'ordre de quelques unités, de préférence égale à cinq.

Selon un mode de réalisation de l'invention, la plus grande dimension de l'image de l'empreinte étant comptée sensiblement parallèlement à la première direction d'observation, les deux directions d'observation délimitent, dans l'un des deux demi-plans définis par la première direction d'observation, deux quadrants respectivement partitionnés en un même nombre de secteurs angulaires disjoints respectivement associés à des valeurs numériques distinctes, les moyens de prétraitement affectant à chaque groupe de données binaires primaires la valeur numérique du secteur angulaire auquel appartient l'orientation générale des crêtes du domaine correspondant audit groupe de données binaires primaires; deux secteurs angulaires symétriques par rapport à la deuxième direction d'observation sont alors respectivement associés à deux valeurs numériques opposées, et les secteurs angulaires de chaque quadrant sont respectivement associés à des valeurs numériques dont les valeurs absolues sont ordonnées de façon croissante, la valeur numérique ayant la plus faible valeur absolue étant associée au secteur angulaire contenant la première direction d'observation, tandis que la valeur numérique ayant la plus forte valeur absolue est associée au secteur angulaire contenant la deuxième direction d'observation.

Avantageusement, les premiers moyens de sélection sont propres à subdiviser au moins une partie dudit premier bloc en des sous-blocs de valeurs numériques correspondant respectivement à des domaines appartenant à au moins une ligne parallèle à la deuxième direction d'observation, tandis que les deuxièmes moyens de traitement sont propres à calculer les cumuls respectifs des valeurs de ces sous-blocs et à analyser la distribution de ces cumuls pour en déduire le rang de ladite deuxième ligne.

Conformément à un mode de réalisation de l'invention, les premiers moyens de traitement comprennent :

- des deuxièmes moyens de sélection propres à sélectionner, au sein de ladite table de valeurs numériques, un deuxième bloc de valeurs numériques associées à un nombre prédéterminé de lignes de domaines de rangs successifs parallèles à la deuxième direction d'observation et correspondant à une deuxième région utile de l'empreinte, et

- des moyens de sélection auxiliaires propres à sélectionner, pour chaque suite de valeurs numériques dudit deuxième bloc correspondant à une suite de domaines appartenant à une ligne courante de domaines parallèle à la première direction d'observation,

  * un sous-bloc supérieur de valeurs numériques correspondant respectivement à des domaines appartenant à un nombre prédéterminé, de préférence deux, de lignes de domaines adjacentes parallèles à ladite ligne courante et situées du côté supérieur de cette ligne courante, et
  * un sous-bloc inférieur de valeurs numériques correspondant respectivement à des domaines appartenant au même nombre prédéterminé de lignes de domaines adjacentes parallèles à ladite ligne courante et situées du côté inférieur de cette ligne courante,

- des premiers moyens de calcul propres à comptabiliser un premier nombre de valeurs numériques du sous-bloc supérieur correspondant à des orientations générales de crêtes appartenant toutes à un premier quadrant délimité par les deux directions d'observation,

- des deuxièmes moyens de calcul propres à comptabiliser un deuxième nombre de valeurs numériques du sous-bloc inférieur correspondant à des orientations générales de crêtes appartenant toutes à un même deuxième quadrant symétrique du premier quadrant par rapport à la deuxième direction d'observation, et

- des troisièmes moyens de calcul propres à effectuer, pour ladite ligne courante, le produit courant desdits premier et deuxième nombres, et à comparer les deux produits courants respectifs de deux lignes courantes adjacentes.

Selon un mode réalisation du dispositif, utilisable notamment dans une application d'authentification, les troisièmes moyens de traitement sont propres à déduire de ladite valeur numérique particulière, un ensemble de données binaires primaires spécifiques correspondant à une région spécifique de l'image contenue à l'intérieur de la région centrale et contenant le domaine particulier associé à ladite valeur numérique particulière; il est alors prévu que le dispositif comprenne, en outre :

- une mémoire propre à contenir un ensemble de données binaires de référence et une table de valeurs numériques de référence associées à une image de référence de l'empreinte, et

- des moyens d'authentification propres à comparer d'une part l'ensemble de données primaires spécifiques avec l'ensemble de données binaires de référence et, d'autre part, ladite table de valeurs numériques avec la table de valeurs numériques de référence.

Les moyens d'authentification comportent alors de préférence :

- des moyens de corrélation propres à effectuer au moins une opération de corrélation entre l'ensemble de données primaires spécifiques et l'ensemble de données binaires de référence et délivrer un coefficient de corrélation correspondant,

- des moyens de calcul propres à déterminer la distance entre ladite table de valeurs numériques et la table de valeurs numériques de référence, à délivrer une valeur de distance correspondante, et

- des moyens de comparaison propres à calculer un coefficient équivalent tiré de ladite valeur de distance et d'une loi prédéterminée, en principe affine, et à comparer le coeeficient de corrélation et le coefficient équivalent aux fins d'authentifier l'image de l'empreinte vis-à-vis de l'image de référence.

D'autres avantages et caractéristiques de l'invention apparaîtront à l'examen de la description détaillée ci-après et des dessins annexés sur lesquels:

- la figure 1 illustre une image d'une empreinte digitale,

- la figure 2 illustre un moyen d'obtention de cette image,

- la figure 3 est un synoptique schématique d'un mode de réalisation du dispositif selon l'invention,

- les figures 4 à 6, 7A à 7D, 8 à 10 illustrent les différentes étapes d'obtention d'une table de valeurs numériques associée à l'image de l'empreinte,

- les figures 11 à 13 illustrent l'obtention d'une valeur numérique particulière dans la table ainsi obtenue,

- les figures 14A et 14B représentent respectivement une première catégorie d'empreinte et sa table de valeurs numériques correspondante,

- les figures 15A et 15B représentent respectivement une deuxième catégorie d'empreinte et sa table de valeurs numériques correspondante, et

- les figures 16, 17A, 17B, 17C, illustrent les différentes étapes de l'authentification de l'image de l'empreinte.

Les dessins comportent pour l'essentiel des éléments de caractère certain. A ce titre, ils font partie intégrante de la description et pourront non seulement servir à mieux faire comprendre la description détaillée ci-après, mais aussi contribuer, le cas échéant, à la définition de l'invention.

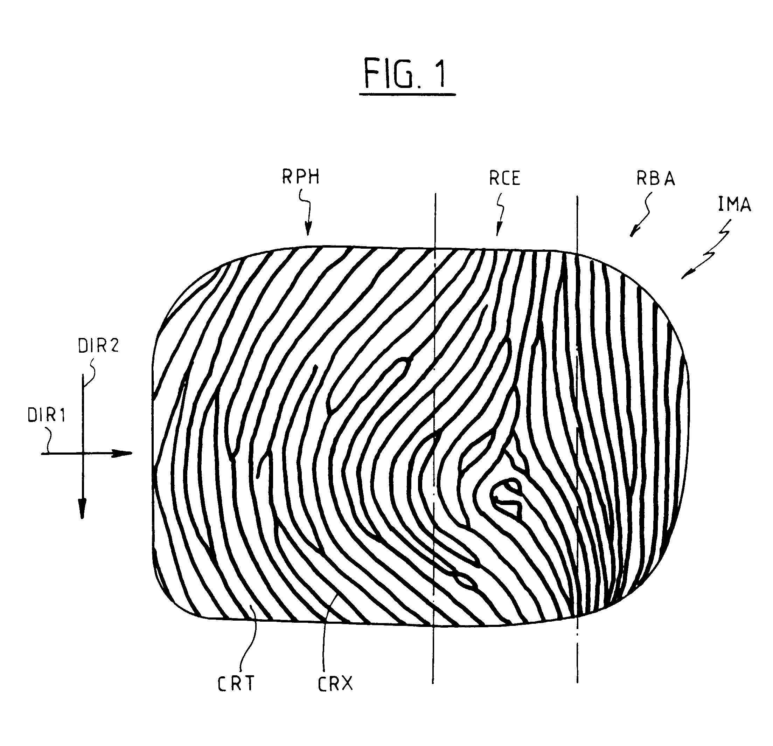

Sur la figure 1, la référence IMA désigne une image d'une empreinte digitale comportant une alternance de lignes claires et de lignes sombres. On admet ici que les lignes claires correspondent aux saillies ou crêtes CRT de l'empreinte digitale tandis que les lignes sombres correspondent aux creux CRX situés entre les crêtes.

Sur cette image, on distingue généralement trois régions. Sur cette figure, on a matérialisé de façon précise les frontières de ces régions bien que celles-ci ne soient pas aussi marquées dans la réalité.

Une première région, ou région centrale RCE, est celle dans laquelle les orientations générales des crêtes sont les plus variées. Cette zone est par conséquent particulièrement riche en informations pertinentes utiles pour distinguer une empreinte d'une autre.

Une deuxième région, ou région basale RBA, est située entre la région centrale RCE et le pli de flexion de la phalange supportant l'empreinte. Cette région RBA est constituée de crêtes ayant des orientations quasi-rectilignes. Bien que ceci n'apparaisse pas sur la figure, à des fins de simplification, la trace de cette région basale est souvent peu marquée en raison de sa position au voisinage d'un bord de l'empreinte.

La troisième région, ou région périphérique RPH, comporte un empilement de crêtes entourant au moins une partie de la région centrale et s'étend jusqu'à l'extrémité libre de la phalange. En conséquence, là encore, généralement les traces laissées par les bords de cette zone périphérique ne sont pas toujours apparentes. Les crêtes CRT de la région périphérique RPH ainsi qu'une partie des crêtes de la région centrale forment un U dont un but du dispositif selon l'invention est de localiser le fond interne.

Bien que l'invention n'y soit pas limitée, on peut utiliser, pour former l'image de l'empreinte digitale, un dispositif de formation d'image tel que celui décrit dans la Demande de Brevet européen No 0361987.

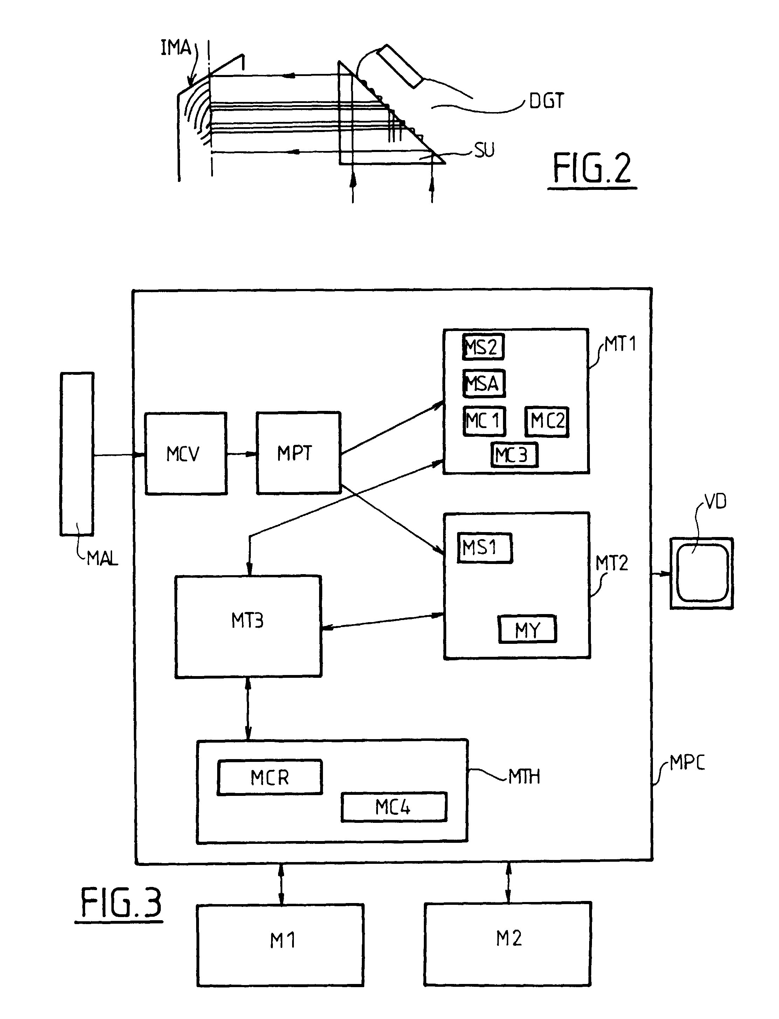

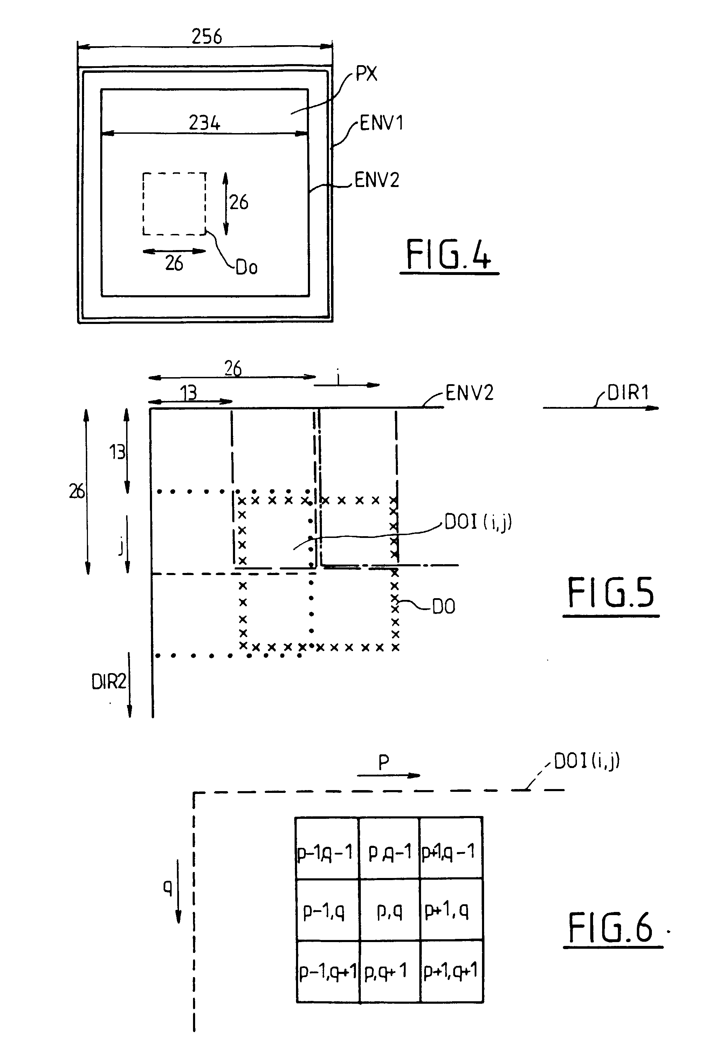

On rappelle ici brièvement qu'un tel dispositif de formation d'image comporte un milieu homogène transparent SV (figure 2), par exemple un prisme, possédant une surface d'appui sur laquelle est appliqué le doigt DGT portant l'empreinte. Après éclairement par un faisceau lumineux, l'image IMA est formée dans un plan dans lequel est placée une matrice CCD (Charge Coupled Device) d'un récepteur CCD classique faisant partie de moyens d'analyse MAL du dispositif dont un synoptique est illustré sur la figure 3.

Le récepteur CCD est propre à analyser l'image IMA selon des zones élémentaires et associer un pixel à chaque zone élémentaire, pour fournir une image numérisée de 512 x 512 pixels codés sur 8 bits, chaque pixel étant alors représentatif d'un niveau de gris choisi parmi 256 niveaux de gris possibles.

En fait, il a été observé, après de nombreux tests, que les performances du dispositif n'étaient pas affectées si l'on n'exploitait réellement qu'une image de 256 x 256 pixels obtenue à partir de l'image initiale de 512 x 512 pixels en retirant un pixel sur deux en lignes et en colonnes.

Des moyens de conversion MCV, reliés à la sortie des moyens d'analyse, sont alors propres à regrouper les pixels par groupes correspondant respectivement à des domaines de l'image couvrant plusieurs zones élémentaires voisines et formant un quadrillage selon deux directions d'observation orthogonales DIR1, DIR2. Ces moyens de conversion convertissent alors, par comparaison à un seuil, chaque groupe de pixels en un groupe de données binaires dites primaires.

Des moyens de prétraitement MPT, reliés aux moyens de conversion MCV, sont alors propres à affecter à chaque groupe de données binaires primaires une valeur numérique représentative de l'orientation générale des crêtes CRT de l'empreinte contenues dans le domaine correspondant par rapport aux directions d'observation, et établir ainsi une table de valeurs numériques.

Des premiers moyens de traitement MT1 déterminent, au sein dudit quadrillage, le rang d'une première ligne de domaines parallèle à la première direction d'observation DIR1, et possédant le nombre maximum de domaines dont les valeurs numériques correspondantes sont représentatives d'une orientation générale de crête sensiblement parallèle à la deuxième direction d'observation DIR2.

D'une façon analogue, des deuxièmes moyens de traitement MT2 déterminent au sein de ce quadrillage le rang d'une deuxième ligne de domaines parallèle à la deuxième direction d'observation DIR2, et possédant le nombre maximum de domaines dont les valeurs numériques correspondantes sont représentatives d'une orientation générale de crête sensiblement parallèle à la première direction d'observation DIR1.

Enfin, des troisièmes moyens de traitement MT3 extraient de la table de valeurs numériques la valeur numérique particulière correspondant au domaine particulier appartenant à la fois auxdites première et deuxième lignes. L'extraction de cette valeur numérique particulière est donc équivalente à la localisation du fond interne du U mentionné ci-avant.

Ces différents moyens sont fonctionnellement regroupés au sein d'un microprocesseur MPC, tel que celui de la série 68000 de la Société des Etats-Unis MOTOROLA, et qui est associé à une mémoire vive de travail M1 et une mémoire morte M2 dont on reviendra plus en détail ci-après sur le contenu.

Il est également prévu un moniteur vidéo VD propre à visualiser l'image obtenue telle que celle illustrée sur la figure 1. A cet effet, il convient de remarquer ici que l'image visualisée IMA sur le moniteur vidéo est inversée en niveau par rapport à l'image obtenue à l'aide du prisme SV (les lignes noires de l'image IMA visualisée sont équivalentes aux lignes blanches de l'image obtenue par le prisme et vice-versa).

L'enveloppe ENV1 de l'image numérisée de 256 x 256 pixels PX est illustrée sur la figure 4. Les domaines DO de l'image sont des carrés de 26 x 26 pixels, dont la taille a été choisie pour que chaque carré contienne au moins deux crêtes. Afin de transformer les pixels en données binaires primaires, il est préférable de ne pas utiliser un seuil de binarisation unique pour toute l'enveloppe ENV1, car le contraste n'est pas constant sur l'image de l'empreinte en niveaux de gris et l'information contenue dans certaines régions de l'image risque d'être dégradée, mais plutôt un seuil de binarisation adapté à chaque domaine DO. A partir de là, on ne considérera dans l'enveloppe ENV1 qu'une sous-enveloppe utile ENV2 de 234 x 234 bits contenant un nombre entier de carrés DO.

Pour calculer le seuil de binarisation, les moyens de conversion calculent tout d'abord la somme de toutes les valeurs de niveaux de gris de tous les pixels du domaine, puis divisent cette somme par le nombre de pixels du domaine, ce qui permet d'obtenir le seuil de binarisation. Si le niveau de gris n(p,q) est supérieur à ce seuil, alors la valeur 1 est affectée à la donnée binaire correspondante au pixel. Dans le cas contraire, la valeur 0 est affectée à cette donnée binaire primaire.

Afin d'obtenir davantage de précisions pour la localisation du fond interne du U, chaque domaine DO comporte un sous-domaine d'intersection DOI avec chacun de ses domaines immédiatement voisins. En d'autres termes, chaque carré DO chevauche ses voisins par demi-largeur et demi-hauteur, et le domaine d'intersection DOI est par conséquent un carré de 13 x 13 pixels (figure 5).

Les moyens de prétraitement vont alors affecter à chaque sous-groupe de données primaires de chaque sous-domaine d'intersection DOI une valeur intermédiaire représentative de l'orientation générale des crêtes de l'empreinte contenues dans le sous-domaine d'intersection correspondant, par rapport aux directions d'observation DIR1, DIR2 illustrées sur la figure 1. Par convention, ici, la plus grande dimension de l'image de l'empreinte est comptée sensiblement parallèlement à la première direction d'observation DIR1. Aussi, on verra ci-après que cette première direction d'observation DIR1 est parallèle aux lignes de la table de valeurs numériques tandis que la direction orthogonale DIR2 est parallèle aux colonnes de la table de valeurs numériques.

Pour un pixel de coordonnées p,q du domaine d'intersection DOI (i,j) (figure 6), les moyens de prétraitement déterminent son poids P(p,q) donné par la formule (I) en annexe. Dans cette formule ng(p,q) désigne le niveau binaire (0 ou 1) du pixel de coordonnées p,q. On remarque que, pour calculer le poids P(p,q), les niveaux des huit pixels voisins entourant le pixel de coordonnées p,q sont pris en compte.

Il est à noter ici que les pixels situés sur les bords de la sous-enveloppe ENV2 possèdent également huit voisins puisque l'enveloppe ENV1 est entièrement binarisée.

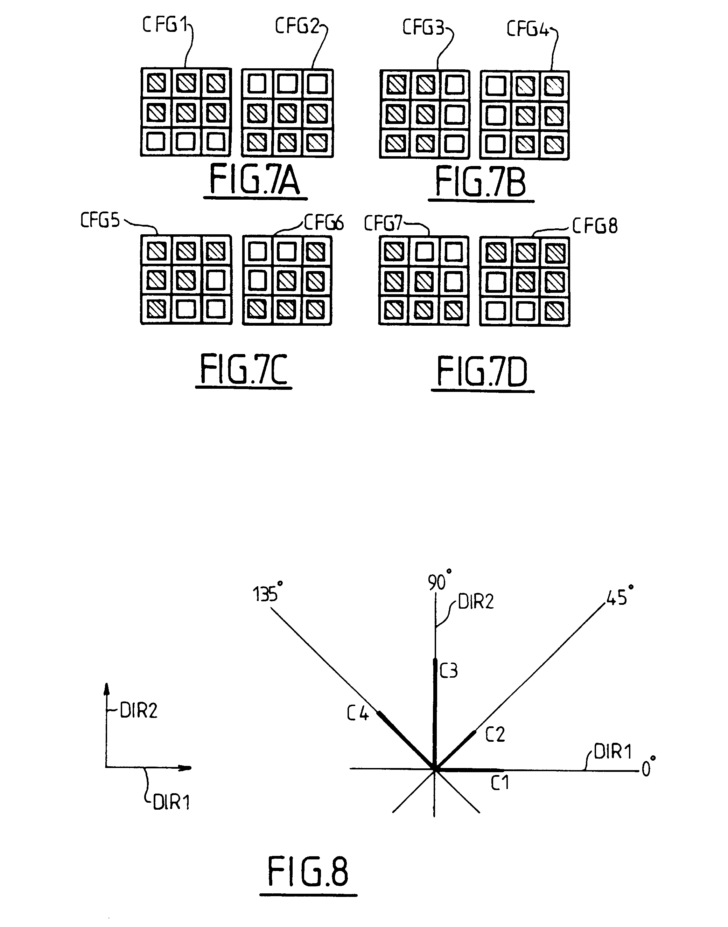

Le poids P(p,q) ainsi obtenu, est compris entre 0 et 511, et est comparé à des valeurs prédéterminées correspondant à des configurations de portions de crête prédéterminées, illustrées sur les figures 7A à 7D, sur lesquelles un carré grisé est représentatif d'une valeur binaire égale à 1.

Les configurations CFG1 et CFG2 correspondent à des orientations de crête horizontales, c'est-à-dire parallèles ici à la première direction d'observation DIR1. Les poids respectifs des pixels centraux des configurations CFG1 et CFG2 sont respectivement égaux à 63 et 483.

Les configurations CFG3 et CFG4 correspondent à des orientations de crête verticales, c'est-à-dire sensiblement parallèles à la deuxième direction d'observation DIR2, et les poids respectifs des pixels centraux sont égaux à 249 et 399.

Les configurations CFG5 et CFG6 correspondent à des orientations générales de crête faisant un angle de 45° par rapport aux directions d'observation tandis que les configurations CFG7 et CFG8 correspondent à des orientations générales de crête faisant un angle de 135° par rapport aux directions d'observation. Les poids des pixels centraux des configurations CFG5, CFG6, CFG7 et CFG8 sont respectivement égaux à 125, 455, 497, 287.

Les moyens de prétraitement comportent, pour chaque domaine d'intersection DOI(i,j) quatre compteurs CPI(i,j), CP2(i,j), CP3(i,j), CP4(i,j), respectivement associés aux quatre paires de configuration CFG1, CFG2; CFG3, CFG4; CFG5, CFG6; CFG7, CFG8.

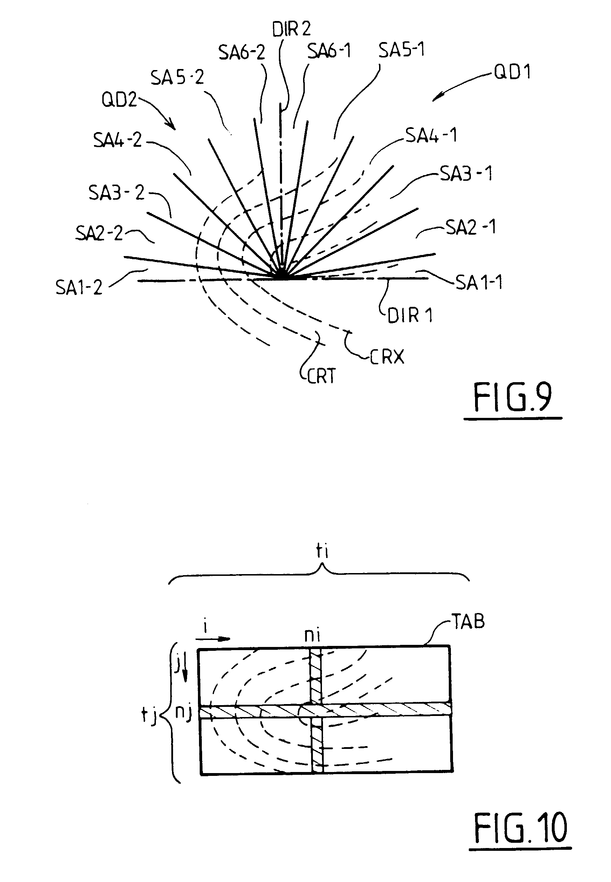

A chaque fois que le poids d'un pixel est égal au poids d'une configuration de référence, le compteur correspondant est incrémenté par les moyens de prétraitement. Dans le cas où le poids d'un pixel ne correspond à aucune configuration de référence, les compteurs ne sont pas modifiés. Les moyens de prétraitement comportent également quatre autres compteurs C1(i,j), C2(i,j), C3(i,j), C4(i,j) associés à chaque domaine DO(i,j), c'est-à-dire à chaque carré de 26 x 26 pixels. Le contenu de chaque compteur C1-C4 est obtenu par les formules (II) en annexe. Ainsi, le contenu de chaque compteur C1(i,j)-C4(i,j) représente la contribution des orientations à 0°, 90°, 135°, 45° du domaine DO(i,j) du quadrillage de 17 x 17 domaines de 26 x 26 pixels se chevauchant de moitié en hauteur et en largeur. A titre d'exemple, la figure 8 illustre une représentation graphique des quatre compteurs C1-C4 sous la forme d'une rosace de direction située dans l'un des deux demi-plans définis par la première direction d'observation DIR1.

A partir de là, les moyens de prétraitement déterminent pour chaque domaine DO(i,j) un vecteur résultant de composantes x,y dont on déduit une valeur de tangente en effectuant le rapport y/x. Cette valeur de tangente est alors assimilée à la pente d'une droite représentative de l'orientation des crêtes du domaine correspondant.

Pour déterminer la composante x du vecteur, le moyens de prétraitement comparent le contenu du compteur C4 au contenu du compteur C3. Si le contenu du compteur C4 est supérieur à celui du compteur C3, alors la composante x est prise égale au contenu du compteur C1 augmenté du produit du contenu du compteur C4 par 0,707. Dans le cas contraire, la composante x est prise égale à l'opposé du contenu du compteur C1 diminué du produit du contenu du compteur C3 par 0,707.

Une opération analogue est effectuée pour la détermination de la composante y. Si le contenu du compteur C4 est supérieur au contenu du compteur C3, la composante y est prise égale au contenu du compteur C2 augmenté du produit du contenu du compteur C4 par 0,707. Dans le cas contraire, la composante y est prise égale au contenu du compteur C2 augmenté du produit du contenu du compteur C3 par 0,707.

Afin d'éviter le traitement d'un trop grand nombre de valeurs de pente différentes, le demi-plan mentionné ci-dessus défini par la première direction d'observation DIR1 délimite deux quadrants QD1, QD2 (figure 9) respectivement partitionnés en un même nombre de secteurs angulaires disjoints SA1-1, ..., SA6-1; SA1-2, ... SA6-2. Ces secteurs angulaires disjoints sont respectivement associés à des valeurs numériques distinctes dont les valeurs absolues sont ordonnées de façon croissante. La valeur numérique ayant la plus faible valeur absolue est associée au secteur angulaire contenant la première direction d'observation DRI1, tandis que la valeur numérique ayant la plus forte valeur absolue est associée au secteur angulaire contenant !a deuxième direction d'observation DIR2. Par ailleurs, deux secteurs angulaires symétriques par rapport à la deuxième direction d'observation DRI2 sont respectivement associées à deux valeurs numériques opposées.

En d'autres termes, par exemple, les valeurs numériques 1, 3, 5, 7 et 9 sont respectivement associées aux secteurs angulaires SA1-1, ... SA6-1 tandis que les valeurs numériques -1, -3, -5, -7 et -9 sont respectivement associées aux secteurs angulaires homologues SA1-2, ... SA6-2. Compte tenu de l'orientation adoptée pour l'empreinte, une valeur absolue élevée correspond à une orientation générale de crête sensiblement verticale tandis qu'une valeur absolue faible correspond à une orientation générale de crête sensiblement horizontale.

Chaque secteur angulaire est associé à un intervalle de valeurs de pente. Les moyens de prétraitement déterminent alors pour chaque valeur de pente obtenue pour un domaine DO le secteur angulaire contenant ladite valeur de pente, et affectent à cette orientation générale de crête la valeur numérique du secteur angulaire correspondant.

La table TAB de valeurs numériques ainsi obtenue peut être représentée sous la forme d'un tableau possédant ti colonnes et tj lignes (figure 10).

La recherche du fond interne du U mentionnée ci-avant va donc consister à rechercher le rang ni d'une colonne du tableau possédant le nombre maximum de valeurs numériques représentatives d'une orientation générale de crête sensiblement horizontale ainsi que le rang nj d'une ligne du tableau possédant le nombre maximum de valeurs numériques correspondant à une orientation générale de crête sensiblement verticale.

Pour déterminer le rang nj de la ligne du tableau, les premiers moyens de traitement utilisent une observation de l'invention. Il apparaît en effet, si l'on adopte l'orientation de la figure 1, que la moitié gauche de l'image de l'empreinte est occupée d'une façon très générale en majeure partie par une zone particulière de la région périphérique, appelée zone distale, comportant une succession de demi-cercles emboîtés appartenant au U. Cette zone ayant pratiquement toujours l'allure d'un demi-disque, il est possible de la partager de façon quasi-symétrique selon la ligne de rang nj. Cette ligne nj représente alors la frontière entre une partie supérieure, où l'orientation des crêtes est positive, et une partie inférieure où cette orientation est négative.

Les premiers moyens de traitement comportent alors des moyens de sélection MS2 propres à sélectionner, au sein de la table de valeurs numériques TAB, un bloc de valeurs numériques associé à un nombre prédéterminé de lignes de domaines de rangs successifs parallèles à la deuxième direction d'observation (colonnes) et correspondant à une région utile DPU2 de l'empreinte. Cette région utile s'étend ici sur une partie au moins de la région périphérique et comporte la zone distale.

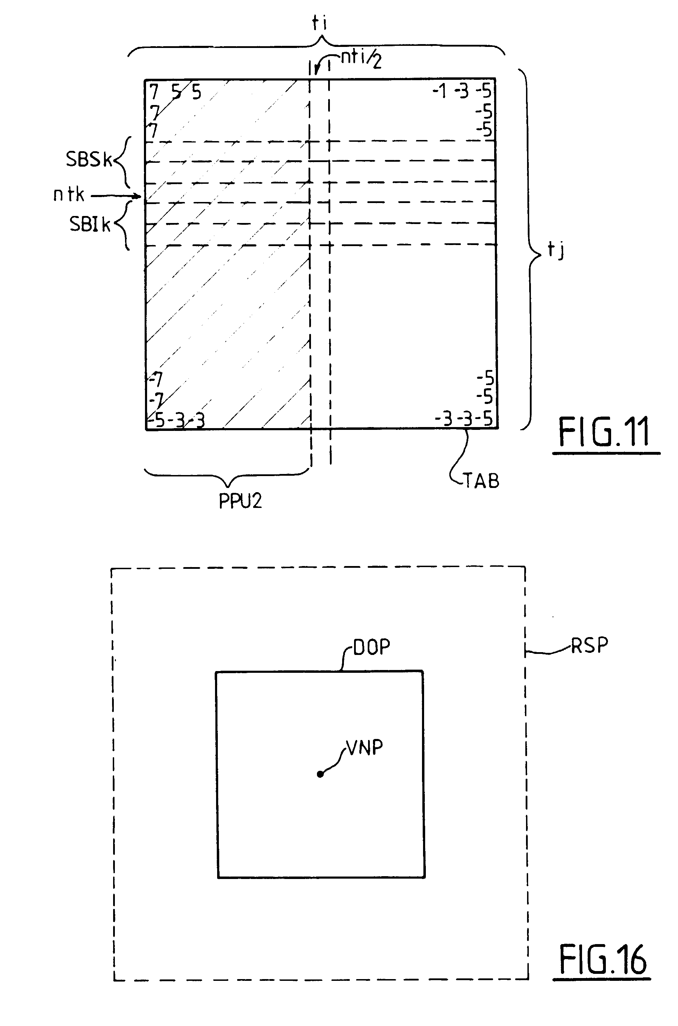

En d'autres termes, les moyens de sélection vont sélectionner la moitié gauche des colonnes du tableau TAB (figure 11).

A partir de là, des moyens de sélection auxiliaires MSA de ces premiers moyens de traitement sont propres à sélectionner, pour chaque suite de valeurs numériques de ce bloc PPU2 correspondant à une suite de domaines appartenant à une ligne courante ntk de domaines parallèles à la première direction d'observation DIR1 (lignes),

* un sous-bloc supérieur SBSk de valeurs numériques correspondant respectivement à des domaines appartenant à un nombre prédéterminé de lignes de domaines adjacentes, parallèles à la ligne courante ntk et situées du côté supérieur de cette ligne courante, et

\* un sous-bloc inférieur SBlk de valeurs numériques correspondant respectivement à des domaine appartenant au même nombre prédéterminé de lignes de domaines adjacentes, parallèles à la ligne courante, mais situées du côté inférieur de cette ligne courante.

En d'autres termes, pour chaque ligne courante ntk, les moyens de sélection auxiliaires sélectionnent dans le bloc PPU2 les deux lignes de la table TAB situées au-dessus de la ligne courante et les deux lignes inférieures.

A partir de là, des premiers moyens de calcul MC1 de ces premiers moyens de traitement comptabilisent un premier nombre de valeurs numériques du sous-bloc supérieur correspondant à des orientations générales de crête appartenant toutes à un même quadrant, ici le quadrant QD1.

D'une façon analogue, des deuxièmes moyens de calcul MC2 comptabilisent un deuxième nombre de valeurs numériques du sous-bloc inférieur correspondant à des orientations générales de crête appartenant toutes au quadrant symétrique du premier par rapport à la direction DIR2, ici le quadrant QD2.

Des troisièmes moyens de calcul sont alors propres à effectuer, pour cette ligne courante, le produit dit "courant" de ces premier et deuxième nombres et à comparer les produits courants respectifs correspondant à deux lignes courantes adjacentes.

Plus précisément, la partie utile PPU2 de la table va être analysée ligne par ligne. Les troisièmes moyens de calcul vont affecter à chaque ligne courante le produit des deux nombres résultant des valeurs numériques du sous-bloc supérieur et du sous-bloc inférieur. La ligne nj recherchée est alors celle pour laquelle le produit de ces deux nombres est maximal.

Une autre observation, qui est à la base de l'invention, va être utilisée pour déterminer le rang ni de la colonne recherchée et va permettre cette détermination quelle que soit l'image de l'empreinte considérée.

Il a d'abord été observé que l'on pouvait distinguer deux catégories générales d'empreintes. Une première catégorie d'empreintes contient les empreintes dites "hautes", dont la région centrale, très relevée, s'étend sur plus du tiers de la longueur totale de l'empreinte, comptée ici le long de la direction d'observation DIR1. La deuxième catégorie d'empreintes contient les empreintes dites "basses", dont la région centrale paraît affaissée et s'étend sur moins d'un tiers de la plus grande dimension de l'empreinte. Il a alors été constaté de façon surprenante que l'on pouvait utiliser cette observation afin que les deuxièmes moyens de traitement puissent déterminer correctement le rang ni de la colonne recherchée. A cet effet, les deuxièmes moyens de traitement comportent des moyens de sélection MS1, propres à sélectionner au sein de la table de valeurs numériques TAB un bloc BC1 de valeurs numériques associé à un nombre prédéterminé de lignes de domaines de rangs successifs, parallèles à la première direction d'observation DIR1 et incluant la ligne de domaines nj.

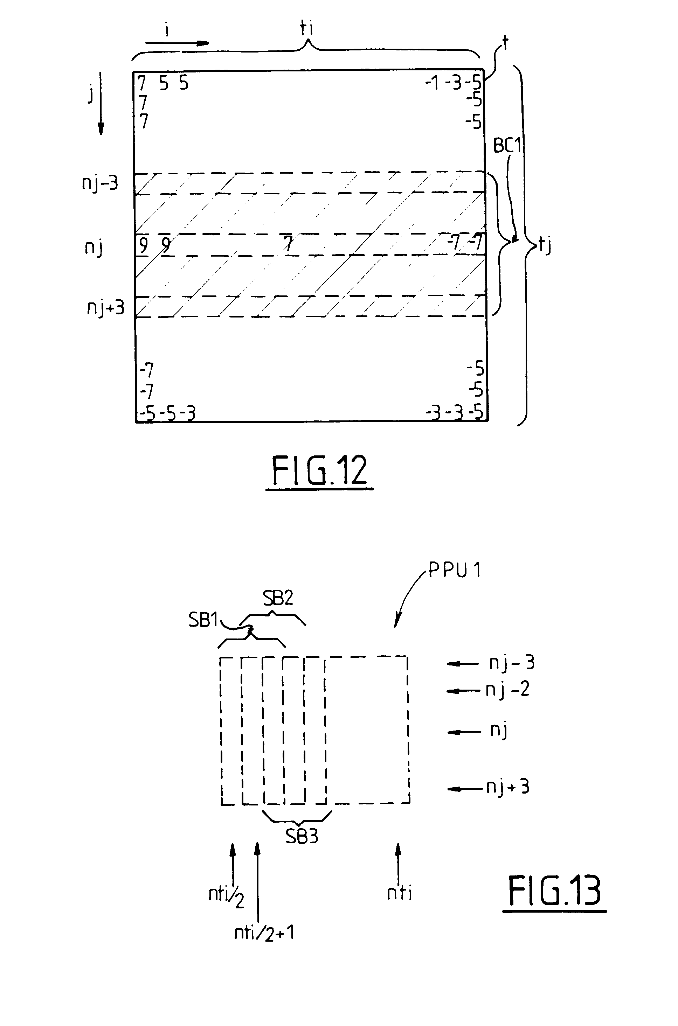

Concrètement, dans le cas présent, ce bloc BC1 (figure 12) correspond à une bande de sept lignes du tableau incluant la ligne nj, les trois lignes supérieures et les trois lignes inférieures.

Il s'est alors avéré particulièrement intéressant d'associer à ce bloc BC1 un rapport RT entre d'une part le nombre de valeurs numériques du bloc BC1 correspondant à une orientation générale de crête sensiblement verticale et, d'autre part, le nombre de valeurs numériques de ce bloc correspondant à une orientation générale de crête sensiblement horizontale, puis à comparer ce rapport à une valeur de référence prédéterminée A.

Cette valeur de référence prédéterminée s'avère en effet reliée aux critères de discrimination des deux catégories générales d'empreintes. Ainsi, une empreinte dont le rapport est inférieur à ladite valeur de référence prédéterminée A appartient à la première catégorie tandis qu'une empreinte dont le rapport est supérieur ou égal à la valeur de référence prédéterminée A appartient à la deuxième catégorie.

Après de nombreuses observations, il est apparu que la valeur de référence était de l'ordre de quelques unités, de préférence égale à 5.

Concrètement, dans le cas présent, on comptabilise un premier nombre de valeurs numériques égal soit à -9 soit à +9, puis un deuxième nombre de valeurs numériques prises dans le groupe (-3, -1, 1, 3). Le rapport RT recherché est le rapport du premier nombre sur le deuxième nombre. Dans le cas où le deuxième nombre est nul, le rapport RT est alors théoriquement infini et est choisi arbitrairement égal à deux fois le premier nombre.

Pour déterminer le rang ni de la colonne recherchée, les moyens de sélection MS1 sont propres à subdiviser au moins une partie du bloc BC1 en des sous-blocs de valeurs numériques correspondant respectivement à des domaines appartenant au moins à une ligne parallèle à la deuxième direction d'observation DIR2, c'est-à-dire à une colonne du tableau. Puis, les deuxièmes moyens de traitement sont propres à calculer les cumuls respectifs de valeurs de ces sous-blocs et à analyser la distribution de ces cumuls pour en déduire le rang nj de cette colonne.

Lorsque le rapport RT est inférieur à la valeur de référence, correspondant à une empreinte haute, les sous-blocs évoqués plus haut correspondent respectivement aux portions des colonnes du tableau TAB contenues dans la bande de lignes nj-3, nj+3. L'analyse de la distribution des cumuls comporte alors les comparaisons de deux cumuls respectifs de deux colonnes voisines.

Concrètement, dans le cas présent, la colonne ni recherchée est celle présentant le cumul de valeurs minimal.

Lorsque le rapport RT est supérieur ou égal à la valeur de référence prédéterminée A, c'est-à-dire dans le cas d'une empreinte basse, les premiers moyens de sélection sont propres à subdiviser seulement une première partie utile du bloc BC1 en lesdits sous-blocs, cette partie utile PPU1 (figure 13) correspondant à une région utile de l'image s'étendant sur au moins une partie de la région basale RBA et sur au moins une partie de la région centrale RCE. Concrètement, la partie PPU1 concerne la moitié droite de la bande de sept lignes nj-3, ..., nj+3.

Chaque sous-bloc correspond à des domaines appartenant à un groupe de lignes de domaines adjacentes tandis que deux groupes voisins respectifs de deux sous-blocs voisins comportent au moins une ligne de domaines commune. En d'autres termes, ici, chaque sous-bloc SB1, SB2, SB3 comporte trois portions de colonne et se déduisent l'un de l'autre par déplacement d'une colonne vers la droite. Deux sous-blocs voisins ont donc une intersection de deux colonnes.

Les seconds moyens de traitement déterminent alors le cumul des valeurs numériques de chacun des sous-blocs. Le fait d'avoir regroupé les colonnes par trois permet ainsi d'avoir une évolution plus uniforme de ces cumuls. Ces cumuls sont alors successivement comparés les uns aux autres et la colonne est la première colonne du premier de deux sous-blocs voisins ayant donné la différence de cumuls maximale.

Ainsi, par exemple, dans le cas de la figure 13, si la différence des cumuls est maximale pour le sous-bloc SB1 et le sous-bloc SB2, la colonne ni recherchée est la colonne nti/2.

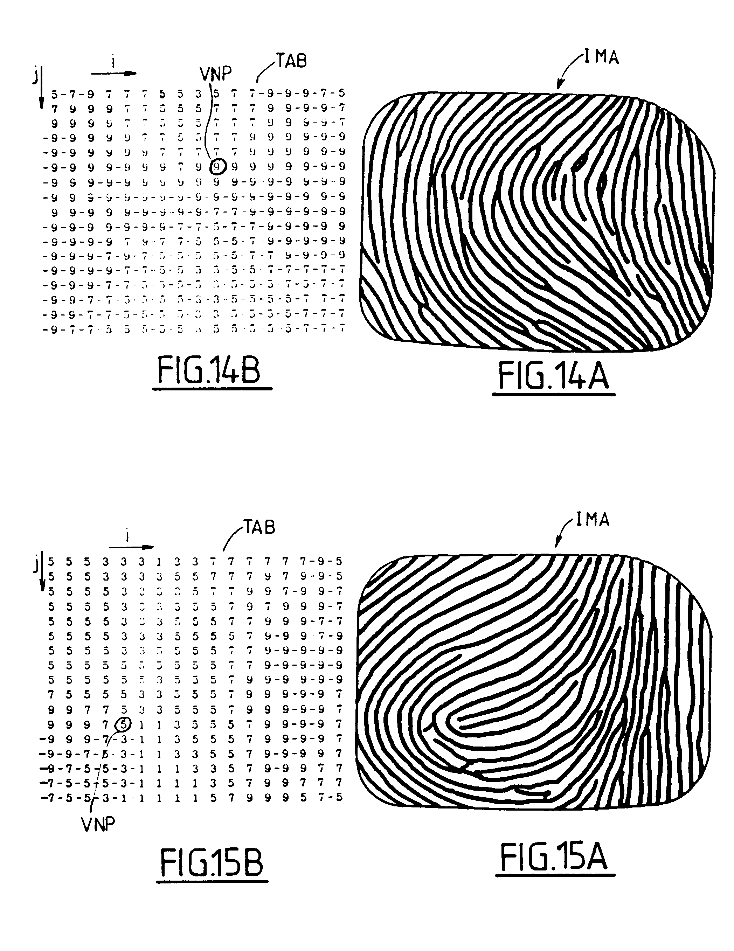

La figure 14A représente l'image d'une empreinte dite basse et la figure 14B illustre la table de valeurs numériques correspondante. La valeur numérique particulière VNP recherchée est la valeur 9 se situant à l'intersection de la colonne 10 et de la ligne 6.

La figure 15A illustre une empreinte dite haute et la valeur numérique particulière VNP issue de la table TAB correspondante (figure 15B) est la valeur 5 se situant à l'intersection de la ligne 12 et de la colonne 5.

A partir de cette valeur numérique particulière VNP située à l'intersection de la ligne nj et de la colonne ni, les troisièmes moyens de traitement MT3 sont propres à déduire un ensemble de données binaires primaires spécifiques correspondant à une région spécifique de l'image RSP contenue à l'intérieur de la région centrale RCE et contenant le domaine particulier DOP associé à cette valeur numérique particulière VNP.

Concrètement, alors que le domaine particulier DOP contient 26 x 26 données binaires primaires, l'ensemble de données binaires primaires spécifiques en contient 100 x 100 et correspond à une région RSP de 100 x 100 pixels centrée autour du domaine particulier DOP.

Le choix de cette dimension de région spécifique RSP permet de localiser quasi-certainement le fond interne du U compte tenu d'erreurs de localisation de la valeur numérique particulière qui sont tout au plus de l'ordre d'un demi-domaine.

Il convient maintenant d'authentifier l'image de l'empreinte digitale avec une référence contenue dans la mémoire morte M2.

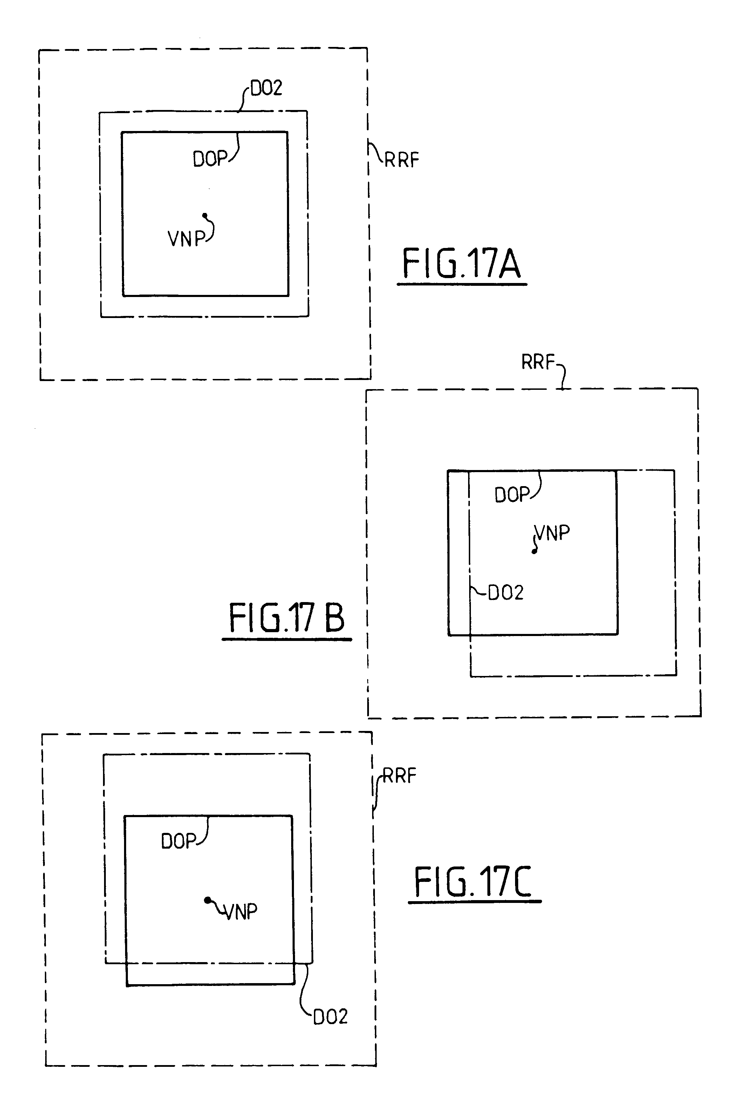

Les figures 17A à 17C illustrent partiellement les étapes de la constitution d'une telle référence.

A partir d'une image de l'empreinte digitale, obtenue de la même façon que précédemment, le dispositif est apte à en déterminer le domaine particulier DOP ainsi qu'une région de référence RRF, contenue à l'intérieur de la région centrale de l'image de référence et ayant une superficie analogue à celle de la région spécifique évoquée précédemment. A partir de là, une sous-région de référence DO2, correspondant à une superficie d'image de 32 x 32 pixels est choisie en fonction d'un critère de choix lié aux éléments caractéristiques spécifiques de l'image contenus dans cette sous-région. Aussi, cette sous-région pourra par exemple être celle présentant les orientations de crêtes les plus variées. Le choix peut être fait visuellement par l'opérateur à partir de l'image de référence visualisée sur le moniteur vidéo VD. On pourrait également concevoir que ce choix soit établi automatiquement par un algorithme approprié. Dans le cas de la figure 17A, cette sous-région DO2 est centrée autour du domaine particulier DOP.

Cette opération est répétée deux fois (figures 17B, 17C) avec deux images de référence différentes. Les sous-régions de référence respectives DO2 ont une superficie identique à la première sous-région de référence. Cependant, elles peuvent être choisies à des endroits différents de la région de référence RRF. En effet, il n'est pas impossible que lorsque l'utilisateur a appliqué trois fois de suite son doigt sur le support, pour constituer sa référence, sa phalange ait quelque peu bougé. Aussi, la sous-région DO2 choisie arbitrairement en fonction des caractéristiques très spécifiques de l'empreinte peut s'être déplacée à l'intérieur de la région de référence RRF.

Une étape finale consiste alors à choisir, parmi les trois sous-régions DO2 obtenues, celle contenant le plus d'informations caractéristiques de l'image. A cette sous-région de référence choisie, correspond un ensemble de données binaires de référence stockées dans la mémoire M2.

Une façon de sélectionner, parmi les trois sous-régions de référence désignées maintenant par D02(1), D02(2) et D02(3), la sous-région D02 choisie,consiste à calculer, pour chaque sous-région DO2(i), des coefficients de corrélation $c(i,j)$ et $c(i,k)$ respectivement obtenus en recherchant la sous-région D02(i) dans les régions de référence RRF (j) et RRF(k). Plus le coefficient de corrélation est grand, plus la sous-région D02 considérée est ressemblante. Ainsi , par exemple, $c(i,j)$ atteint 100% lorsqu'on a trouvé dans la région RRF(j) une zone strictement identique à DO2(i). Aussi on détermine :

- pour la sous-région D02(1) un coefficient CC1 égal à c(1,2) + c(1,3),

- pour la sous-région D02(2) un coefficient CC2 égal à c(2,1) + c(2,3) et

- pour la sous-région D02(3), un coefficient CC3 égal à c(3,1) + c(3,2).

Le maximum des coefficients CC1, CC2, CC3, est ensuite déterminé ce qui permet de choisir, comme sous-région DO2 de référence celle correspondant à ce coefficient maximum.

Par ailleurs,ladite mémoire M2 contient également une table de valeurs numériques de référence TABR associée au domaine particulier DOP de l'image de référence.

Cette table TABR est choisie parmi les trois tables obtenues à partir des trois sous-régions D02, selon un critère de sélection analogue à celui décrit pour le choix de la sous-région de référence choisie D02.

Ainsi, si Ti, Tj, et Tk désignent les trois tables, une méthode consiste à rechercher la distance d(i,j) entre les tables Ti et Tj. A cet effet on peut utiliser l'algorithme de comparaison dynamique de deux tableaux tel que celui présenté dans l'article de Sylvain DUVAL et al ("Comparison of two images by dynamic programming") publié dans les annales du Congrès ICIP'89 ci-dessus mentionné. A partir de là, on compare chaque table aux deux autres en calculant :

- pour la table T1 la valeur D1 égale à d(1,2)+d(1,3),

- pour la table T2 la valeur D2 égale à d(1,2)+d(2,3),

- pour la table T3 la valeur D3 égale à d(1,3)+d(2,3).

Le minimum de D1, D2 et D3 est ensuite déterminé, et la table TABR retenue est celle correspondant à ce minimum puisqu'elle est la plus proche des deux autres au sens de la distance, et donc la plus représentative des trois.

Des moyens de corrélation MCR, appartenant aux moyens d'authentification MTH, sont alors propres à effectuer des opérations de corrélation entre l'ensemble de données primaires spécifique de l'image de l'empreinte à authentifier, et l'ensemble de données binaires de référence. Ces moyens de corrélation délivrent alors un coefficient de corrélation correspondant C, représentatif d'un pourcentage de concordance entre les différentes données binaires.

Par ailleurs, des moyens de calcul MC4 sont propres à déterminer la distance entre la table de valeurs numériques TAB de l'image à authentifier et la table de valeurs numériques de référence TABR, pour délivrer une valeur de distance correspondante D. A cet effet, les moyens de calcul MC4 peuvent encore utiliser l'algorithme de comparaison dynamique de deux tableaux tels que celui présenté dans l'article de Sylvain DUVAL et al.

Il a alors été observé, de façon surprenante et inattendue, qu'il était possible, pour décider si l'image à authentifier correspondait bien à l'image de référence, de comparer le coefficient de corrélation C obtenu à un coefficient de corrélation équivalent tiré de ladite valeur de distance D et d'une loi prédéterminée.

Cette loi s'avère être une loi affine. En d'autres termes, le coefficient équivalent Ceq est égal à aD+b avec a=0,06 et b= 66.

Si le coefficient C est supérieur au coefficient équivalent Ceq, il y a authentification. Dans le cas contraire, l'image à authentifier est rejetée.

Les avantages du dispositif selon l'invention sont les suivants, outre ceux déjà évoqués :

- la localisation d'une région spécifique à l'intérieur de la région centrale de l'image de l'empreinte est directement déduite de la morphologie générale de l'empreinte. Cette localisation est indépendante des effets de translation et de roulement de l'image de l'empreinte sur le support de saisie, qui modifie, d'une saisie à l'autre, les frontières de l'image de l'empreinte.

- La restriction des traitements d'authentification à cette zone spécifique, qui est à la fois la plus stable et la plus pertinente en informations, permet de diminuer considérablement les temps de calcul. Certes, il est nécessaire d'analyser une première fois l'image en entier pour construire la table de valeurs numériques. Mais le fait de traiter l'image à partir de cette table de valeurs numériques permet d'échapper aux effets de coupure et de distorsion des lignes de crête, des variations de contraste et de tout ce qui peut dégrader le détail d'une image comme par exemple le bruit.

L'invention n'est pas limitée au mode de réalisation ci-dessus décrit mais en embrasse toutes les variantes contenues dans le cadre des revendications ci-après.

Bien entendu, certains des moyens décrits ci-dessus peuvent être omis dans les variantes où ils ne servent pas.

ANNEXE

$$(I) \qquad P(p,q) = 2^8 \, ng(p+1,q+1) + 2^7 \, ng(p,q+1) + 2^6 \, ng(p-1,q+1)$$

$$+ \, 2^5 \, ng(p-1,q) + 2^4 \, ng(p-1,q-1) + 2^3 \, ng(p,q-1)$$

$$+ \, 2^2 \, ng(p+1, q-1) + 2^1 \, ng(p+1,q) + 2^0 \, ng(p,q)$$

$$(II) \qquad C1(i,j) = CP1(i,j) + CP1(i+1,j) + CP1(i,j+1) + CP1(i+1,j+1)$$

$$C2(i,j) = CP2(i,j) + CP2(i+1,j) + CP2(i,j+1) + CP2(i+1,j+1)$$

$$C3(i,j) = CP4(i,j) + CP4(i+1,j) + CP4(i,j+1) + CP4(i+1,j+1)$$

$$C4(i,j) = CP4(i,j) + CP4(i+1,j) + CP4(i,j+1) + CP4(i+1,j+1)$$

**Revendications**

1. Dispositif de traitement de l'image d'une empreinte digitale, comportant :

   - des moyens d'analyse (MAL) propres à analyser l'image (IMA) selon des zones élémentaires et associer un pixel à chaque zone élémentaire,

   - des moyens de conversion (MCV) propres à regrouper les pixels par groupes correspondant respectivement à des domaines (DO) de l'image couvrant plusieurs zones élémentaires voisines et formant un quadrillage de l'image selon deux directions d'observation orthogonales (DIR1,DIR2), et à convertir, par comparaison à un seuil, chaque groupe de pixels en un groupe de données binaires primaires,

   - des moyens de prétraitement (MPT) propres à affecter à chaque groupe de données primaires, une valeur numérique représentative de l'orientation générale des crêtes (CRT) de l'empreinte contenues dans le domaine correspondant par rapport aux directions d'observation, et établir ainsi une table de valeurs numériques (TAB),

   - des premiers moyens de traitement (MT1) propres à déterminer, au sein dudit quadrillage, le rang (nj) d'une première ligne de domaines parallèle à la première direction d'observation (DIR1), et possédant le nombre maximum de domaines dont les valeurs numériques correspondantes sont représentatives d'une orientation générale de crêtes (CRT) sensiblement parallèle à la deuxième direction d'observation (DIR2),

   - des deuxièmes moyens de traitement (MT2) propres à déterminer au sein dudit quadrillage, le rang (ni) d'une deuxième ligne de domaines parallèle à la deuxième direction d'observation (DIR2), et possédant le nombre maximum de domaines dont les valeurs numériques correspondantes sont représentatives d'une orientation générale de crêtes (CRT) sensiblement parallèle à la première direction d'observation (DIR1), ainsi que

   - des troisièmes moyens de traitement (MT3) propres à extraire de ladite table de valeurs numériques (TAB), la valeur numérique particulière correspondant au domaine (DO(i,j)) appartenant à la fois auxdites première et deuxième lignes (nj,ni),

   caractérisé en ce que les deuxièmes moyens de traitement (MT2) comprennent :

   des premiers moyens de sélection (MS1), au sein de ladite table de valeurs numériques (TAB), d'un premier bloc (BC1) de valeurs numériques associées à un nombre prédéterminé de lignes de domaines de rangs successifs parallèles à la première direction d'observation (DIR1) et incluant ladite première ligne de domaines (nj), et

   des moyens (MY) propres à établir un rapport (RT) entre, d'une part, le nombre de valeurs numériques dudit premier bloc (BC1) correspondant à une orientation générale de crêtes (CRT) sensiblement parallèle à la deuxième direction d'observation (DIR2), et d'autre part, le nombre de valeurs numériques de ce premier bloc (BC1) correspondant à une orientation générale de crêtes (CRT) sensiblement parallèle à la première direction d'observation (DIR1), et à comparer ledit rapport à une valeur de référence prédéterminée (A), reliée à un critère de discrimination de deux catégories générales d'empreintes prédéterminé, ce qui permet une pré-classification de l'empreinte ainsi traitée parmi ces deux catégories générales d'empreintes.

2. Dispositif selon la revendication 1, caractérisé en ce que la plus grande dimension de l'image (IMA) de l'empreinte est comptée sensiblement parallèlement à la première direction d'observation (DIR1),

en ce que les deux directions d'observation délimitent, dans l'un des deux demi-plans définis par la première direction d'observation (DIR1), deux quadrants (QD1,QD2) respectivement partitionnés en un même nombre de secteurs angulaires disjoints (SA1-1,...SA6-1;SA1-2,...SA6-2) respectivement associés à des valeurs numériques distinctes, les moyens de prétraitement (MPT) affectant à chaque groupe de données binaires primaires la valeur numérique du secteur angulaire auquel appartient l'orientation générale des crêtes (CRT) du domaine correspondant audit groupe de données binaires primaires,

en ce que deux secteurs angulaires symétriques par rapport à la deuxième direction d'observation (DIR2) sont respectivement associés à deux valeurs numériques opposées,

et en ce que les secteurs angulaires de chaque quadrant sont respectivement associés à des valeurs numériques dont les valeurs absolues sont ordonnées de façon croissante, la valeur numérique ayant la plus faible valeur absolue étant associée au secteur angulaire contenant la première direction d'observation (DIR1), tandis que la valeur numérique ayant la plus forte valeur absolue est associée au secteur angulaire contenant la deuxième direction d'observation (DIR2).

3. Dispositif selon la revendication 1 ou 2, dans lequel l'image (IMA) de l'empreinte digitale comporte une région centrale (RCE) et une région basale (RBA) située entre la région centrale (RCE) et le pli de flexion de la phalange supportant l'empreinte, caractérisé en ce que le critère de discrimination de deux catégories générales d'empreintes porte sur le rapport de la plus grande dimension de la région centrale (RCE) à la plus grande dimension de l'empreinte totale.

4. Dispositif selon la revendication 3, caractérisé en ce que la première catégorie d'empreintes comprend les empreintes dont la plus grande dimension de la région centrale (RCE) est supérieure à sensiblement le tiers de la plus grande dimension de l'empreinte totale, tandis que la deuxième catégorie d'empreintes comprend les empreintes dont la plus grande dimension de la région centrale (RCE) est inférieure ou égale à sensiblement le tiers de la plus grande dimension de l'empreinte totale,

en ce qu'une empreinte dont ledit rapport (RT) est inférieur à ladite valeur de référence prédéterminée (A) appartient à ladite première catégorie, tandis qu'une empreinte dont ledit rapport est supérieur ou égal à ladite valeur de référence prédéterminée appartient à ladite deuxième catégorie,

et en ce que ladite valeur de référence prédéterminée est de l'ordre de quelques unités, de préférence égale à cinq.

5. Dispositif selon l'une des revendications précédentes, caractérisé en ce que les premiers moyens de sélection (MS1) sont propres à subdiviser au moins une partie dudit premier bloc (BC1) en des sous-blocs de valeurs numériques correspondant respectivement à des domaines appartenant à au moins une ligne parallèle à la deuxième direction d'observation (DIR2), et en les deuxièmes moyens de traitement (MT2) sont propres à calculer les cumuls respectifs des valeurs de ces sous--blocs et à analyser la distribution de ces cumuls pour en déduire le rang de ladite deuxième ligne.

6. Dispositif selon la revendication 5, caractérisé en ce que, dans le cas où ledit rapport est inférieur à ladite valeur de référence, les premiers moyens de sélection (MS1) sont propres à subdiviser la totalité dudit premier bloc en lesdits sous-blocs, chaque sous-bloc correspondant à des domaines appartenant tous à la même ligne de domaine, et en ce que l'analyse de la distribution des cumuls comporte, pour certains au moins des sous-blocs, des comparaisons de deux cumuls respectifs de deux sous-blocs voisins correspondant à deux lignes de domaines adjacentes.

**7.** Dispositif selon la revendication 5, caractérisé en ce que, dans le cas où ledit rapport est supérieur ou égal à ladite valeur de référence, les premiers moyens de sélection (MS1) sont propres à subdiviser une première partie utile (PU1) dudit premier bloc en lesdits sous-blocs, ladite première partie utile correspondant à une première région utile de l'image (IMA) de l'empreinte,

en ce que chaque sous-bloc correspond à des domaines appartenant à un groupe de lignes de domaines adjacentes, de préférence trois, tandis que deux groupes voisins respectifs de deux sous-blocs voisins comportent au moins une ligne de domaines commune,

et en ce que l'analyse de la distribution des cumuls comporte, pour certains au moins des sous-blocs, la détermination d'une première différence entre les cumuls respectifs d'un premier sous-bloc et d'un deuxième sous-bloc, voisin du premier sous-bloc, ainsi que d'une deuxième différence entre les cumuls respectifs du deuxième sous-bloc et d'un troisième sous-bloc, voisin du deuxième sous-bloc, puis la comparaison des première et deuxième différences.

**8.** Dispositif selon la revendication 7, dans lequel dans lequel l'image (IMA) de l'empreinte digitale comporte une région centrale (RCE) et une région basale (RBA) située entre la région centrale (RCE) et le pli de flexion de la phalange supportant l'empreinte, caractérisé en ce que ladite première région utile s'étend sur au moins une partie de la région basale (RBA) et sur au moins une partie de la région centrale (RCE).

**9.** Dispositif selon la revendication 2 prise en combinaison avec l'une des revendications 6 à 8, caractérisé en ce que, dans le cas où ledit rapport est inférieur à ladite valeur de référence, l'analyse de la distribution des cumuls comporte la recherche du cumul minimal, tandis que dans le cas où ledit rapport est supérieur ou égal à ladite valeur de référence, l'analyse de la distribution des cumuls comporte la recherche de la différence minimale de cumuls.

**10.** Dispositif selon l'une des revendications précédentes, caractérisé en ce que les premiers moyens de traitement (MT1) comprennent :

- des deuxièmes moyens de sélection (MS2) propres à sélectionner, au sein de ladite table de valeurs numériques (TAB), un deuxième bloc de valeurs numériques associées à un nombre prédéterminé de lignes de domaines de rangs successifs parallèles à la deuxième direction d'observation (DIR2) et correspondant à une deuxième région utile de l'empreinte, et

- des moyens de sélection auxiliaire (MSA) propres à sélectionner, pour chaque suite de valeurs numériques dudit deuxième bloc correspondant à une suite de domaines appartenant à une ligne courante de domaines parallèle à la première direction d'observation (DIR1),

  * un sous-bloc supérieur de valeurs numériques correspondant respectivement à des domaines appartenant à un nombre prédéterminé, de préférence deux, de lignes de domaines adjacentes parallèles à ladite ligne courante et situées du côté supérieur de cette ligne courante, et
  * un sous-bloc inférieur de valeurs numériques correspondant respectivement à des domaines appartenant au même nombre prédéterminé de lignes de domaines adjacentes parallèles à ladite ligne courante et situées du côté inférieur de cette ligne courante,

- des premiers moyens de calcul (MC1) propres à comptabiliser un premier nombre de valeurs numériques du sous-bloc supérieur correspondant à des orientations générales de crêtes (CRT) appartenant toutes à un premier quadrant délimité par les deux directions d'observation,

- des deuxièmes moyens de calcul (MC2) propres à comptabiliser un deuxième nombre de valeurs numériques du sous-bloc inférieur correspondant à des orientations générales de crêtes (CRT) appartenant toutes à un même deuxième quadrant symétrique du premier quadrant par rapport à la deuxième direction d'observation (DIR2), et

- des troisièmes moyens de calcul (MC3) propres à effectuer, pour ladite ligne courante, le produit courant desdits premier et deuxième nombres, et à comparer les deux produits courants respectifs de deux lignes courantes adjacentes.

**11.** Dispositif selon la revendication 10, dans lequel l'image (IMA) de l'empreinte comporte en outre une région périphérique (RPH) située entre la région centrale (RCE) et l'extrémité de la phalange supportant l'empreinte, caractérisé en ce que la deuxième région utile s'étend sur une partie au moins de la région périphérique (RPH).

**12.** Dispositif selon la revendication 2 prise en combinaison avec l'une des revendications 10 et 11, caractérisé en ce que les troisièmes moyens de calcul (MC3) sont propres à rechercher le produit courant maximal.

**13.** Dispositif selon l'une des revendications précédentes, caractérisé en ce que chaque domaine comporte un nombre basique de zones élémentaires choisi en fonction d'un critère de regroupement portant sur un nombre minimum de crêtes (CRT) susceptible d'être contenues dans ledit domaine,
et en ce que chaque domaine comporte un sous-domaine d'intersection avec chacun de ses domaines immédiatement voisins.

**14.** Dispositif selon la revendication 13, caractérisé en ce que le nombre basique de chaque domaine est identique pour tous les domaines,

en ce que le nombre de zones élémentaires de chaque sous-domaine d'intersection est identique pour tous les sous-domaines d'intersection,

et en ce que les moyens de prétraitement (MPT) sont propres à affecter à chaque sous-groupe de données primaires de chaque sous-domaine d'intersection, une valeur intermédiaire représentative de l'orientation générale des crêtes (CRT) de l'empreinte contenues dans le sous-domaine d'intersection correspondant par rapport aux directions d'observation, et déduire la table de valeurs numériques (TAB) desdites valeurs intermédiaires.

**15.** Dispositif selon l'une des revendications précédentes, dans lequel l'image (IMA) de l'empreinte digitale comporte une région centrale (RCE), une région basale (RBA) située entre la région centrale (RCE) et le pli de flexion de la phalange supportant l'empreinte ainsi qu'une région périphérique (RPH) située entre la région centrale (RCE) et l'extrémité de ladite phalange, caractérisé en ce que les troisièmes moyens de traitement (MT3) sont propres à déduire de ladite valeur numérique particulière, un ensemble de données binaires primaires spécifiques correspondant à une région spécifique de l'image contenue à l'intérieur de la région centrale (RCE) et contenant le domaine particulier associé à ladite valeur numérique particulière,
en ce que le dispositif comprend, en outre:

- une mémoire (M1) propre à contenir un ensemble de données binaires de référence et une table de valeurs numériques de référence (TABR) associées à une image de référence de l'empreinte,

- des moyens d'authentification (MTH) propres à comparer d'une part l'ensemble de données primaires spécifiques avec l'ensemble de données binaires de référence et, d'autre part, ladite table de valeurs numériques (TAB) avec la table de valeurs numériques de référence (TABR).

**16.** Dispositif selon la revendication 15, caractérisé en ce que les moyens d'authentification (MTH) comportent:

- des moyens de corrélation (MCR) propres à effectuer au moins une opération de corrélation entre l'ensemble de données primaires spécifiques et l'ensemble de données binaires de référence et délivrer un coefficient de corrélation correspondant,

- des quatrièmes moyens de calcul (MC4) propres à déterminer la distance entre ladite table de valeurs numériques (TAB) et la table de valeurs numériques de référence (TABR), à délivrer une valeur de distance correspondante, et

- des moyens de comparaison propres à calculer un coefficient équivalent tiré de ladite valeur de distance et d'une loi prédéterminée, et à comparer le coefficient de corrélation et le coefficient équivalent aux fins d'authentifier l'image (IMA) de l'empreinte vis-à-vis de l'image de référence.

**17.** Dispositif selon la revendication 16, caractérisé en ce que ladite loi prédéterminée est une loi affine.

**18.** Dispositif selon l'une des revendications 15 à 17, caractérisé en ce que l'ensemble de données primaires de référence correspond à une sous-région de référence ayant une superficie au moins égale à celle dudit domaine particulier, et choisie à l'intérieur d'une région de référence, contenue à l'intérieur de la région centrale (RCE) de l'image de référence et ayant une superficie analogue à celle de ladite région spécifique.

**Patentansprüche**

1. Vorrichtung zum Verarbeiten der Abbildung eines Fingerabdrucks, welche folgendes aufweist;

   - eine zum Analysieren der Abbildung (IMA) nach Elementarzonen und zum Zuordnen eines Bildpunkts zu jeder Elementarzone geeignete Analyseeinrichtung (MAL).

   - entsprechende Konvertiereinrichtungen (MCV) zum Umgruppieren der Bildpunkte in jeweils Bildbereichen (DO) entsprechende Gruppen, welche mehrere benachbarte Elementarzonen abdecken und ein Raster der Abbildung in zwei rechtwinklig zueinander stehenden Betrachtungsrichtungen (DIR1, DIR2) bilden, sowie zum Konvertieren jeder Bildpunktgruppe durch Vergleich mit einem Schwellenwert in eine Gruppe primärer Binärdaten,

   - eine geeignete Einrichtung zur Vorverarbeitung (MPT), welche jeder Gruppe Primärdaten einen numerischen Wert zuordnet, der für die allgemeine Ausrichtung von Papillarlinien (CRT) des Abdrucks, bezogen auf die Betrachtungsrichtungen, repräsentativ ist, welche im entsprechenden Bereich enthalten sind, sowie zum Erstellen einer numerischen Wertetabelle (TAB) auf diese Weise,

   - eine erste Verarbeitungseinrichtung (MT1), die dazu geeignet ist, innerhalb des Rasters die Rangstufe (nj) einer ersten zur ersten Betrachtungsrichtung (DIR1) parallelen Linie von Bereichen zu bestimmen, die die größtmögliche Anzahl von Bereichen umfaßt, deren entsprechende numerische Werte repräsentativ für eine allgemeine Ausrichtung der Papillarlinien (CRT) im wesentlichen parallel zur zweiten Betrachtungsrichtung (DIR2) sind,

   - eine zweite Verarbeitungseinrichtung (MT2), die dazu geeignet ist, innerhalb des Rasters die Rangstufe (ni) einer zweiten zur zweiten Betrachtungsrichtung (DIR2) parallelen Linie von Bereichen zu bestimmen, die die größtmögliche Anzahl von Bereichen umfaßt, deren entsprechende numerische Werte repräsentativ für eine allgemeine Ausrichtung der Papillarlinien (CRT) im wesentlichen parallel zur ersten Betrachtungsrichtung (DIR1) sind, sowie

   - eine dritte Verarbeitungseinrichtung (MT3), die dazu geeignet ist, aus der numerischen Wertetabelle (TAB) den speziellen numerischen Wert auszuwählen, welcher dem Bereich (DO(i,j)) entspricht, der gleichzeitig zur ersten und zweiten Linie (nj, ni) gehört,

   dadurch **gekennzeichnet**, daß die zweite Verarbeitungseinrichtung (MT2) folgendes aufweist:

   eine erste Auswahleinrichtung (MS1) innerhalb der numerischen Wertetabelle (TAB) für einen ersten Block (BC1) numerischer Werte, die einer vorgegebenen Anzahl von Linien mit Bereichen aufeinanderfolgender Rangstufen zugeordnet ist, welche parallel zur ersten Betrachtungsrichtung (DIR1) verlaufen und die erste Bereichslinie (nj) umfassen, und

   eine entsprechende Einrichtung (MY) zum Bilden eines Verhältnisses (RT) zwischen der Anzahl numerischer Werte des ersten Blocks (BC1), die einer allgemeinen Ausrichtung der Papillarlinien (CRT) im wesentlichen parallel zur zweiten Betrachtungsrichtung (DIR2) entsprechen, einerseits und der Anzahl numerischer Werte dieses ersten Blocks (BC1) andererseits, welche einer allgemeinen Ausrichtung der Papillarlinien (CRT) im wesentlichen parallel zur ersten Betrachtungsrichtung (DIR1) entsprechen, sowie zum Vergleichen dieses Verhältnisses mit einem vorgegebenen Bezugswert (A), der mit einem vorbestimmten Unterscheidungskriterium für zwei allgemeine Kategorien von Abdrücken verknüpft ist, wodurch eine Vorklassifizierung des derart verarbeiteten Abdrucks unter diesen beiden allgemeinen Kategorien von Abdrücken möglich wird.

2. Vorrichtung nach Anspruch 1, dadurch **gekennzeichnet**, daß die größte Erstreckung der Abbildung (IMA) des Fingerabdrucks im wesentlichen parallel zur ersten Betrachtungsrichtung (DIR1) abgezählt ist,

daß die beiden Betrachtungsrichtungen in einer der beiden Halbebenen, die durch die erste Betrachtungsrichtung (DIR1) definiert sind, zwei Quadranten (QD1, QD2) abgrenzen, die jeweils in eine gleiche Anzahl voneinander getrennter Winkelsektoren (SA1-1, ... SA6-1; SA1-2, ... SA6-2), unterteilt sind, welche jeweils unterschiedlichen numerischen Werten zugeordnet sind, wobei die Vorverarbeitungseinrichtung (MPT) jeder Gruppe primärer binärer Daten den numerischen Wert des Winkelsektors zuordnet, in welchen die allgemeine Ausrichtung der Papillarlinien (CRT) in dem Bereich fällt, welcher der Gruppe primärer Binärdaten entspricht,

daß die beiden zur zweiten Betrachtungsrichtung (DIR2) symmetrische liegenden Winkelsektoren jeweils zwei entgegengesetzten numerischen Werten zugeordnet sind,

und daß die Winkelsektoren jedes Quadranten jeweils numerischen Werten zugeordnet sind, deren absolute Beträge aufsteigend geordnet sind, wobei der numerische Wert mit dem kleinsten absoluten Betrag dem Winkelsektor zugeordnet ist, der die erste Betrachtungsrichtung (DIR1) enthält, während der numerische Wert mit dem höchsten absoluten Betrag dem Winkelsektor zugeordnet ist, welcher die zweite Betrachtungsrichtung (DIR2) enthält.

3. Vorrichtung nach Anspruch 1 oder 2, bei welcher die Abbildung (IMA) des Fingerabdrucks einen zentralen Bezirk (RCE) und einen Basalbezirk (RBA) enthält, welcher zwischen dem zentralen Bezirk (RCE) und der Abbiegefalte des den Abdruck tragenden Fingerglieds liegt, dadurch **gekennzeichnet**, daß das Kriterium zur Unterscheidung der beiden generellen Abdruckkategorien das Verhältnis zwischen der größten Abmessung des zentralen Bezirks (RCE) und der größten Abmessung des Gesamtabdrucks betrifft.

4. Vorrichtung nach Anspruch 3, dadurch **gekennzeichnet**, daß die erste Abdruckkategorie diejenigen Abdrücke umfaßt, bei denen die größte Abmessung des zentralen Bezirks (RCE) größer ist als im wesentlichen ein Drittel der größten Abmessung des Gesamtabdrucks, während die zweite Abdruckkategorie die Abdrücke umfaßt, bei denen die größte Abmessung des zentralen Bezirks (RCE) kleiner oder im wesentlichen gleich dem Drittel der größten Abmessung des Gesamtabdrucks ist,

daß ein Abdruck bei dem das Verhältnis (RT) kleiner als der vorgegebene Bezugswert (A) ist, der ersten Kategorie angehört, während ein Abdruck, bei dem das Verhältnis größer oder gleich diesem vorgegebenen Bezugswert ist, in die zweite Kategorie fällt,

und daß der vorgegebene Bezugswert in der Größenordnung von einigen Einheiten und vorzugsweise gleich fünf ist.

5. Vorrichtung nach einem der vorhergehenden Ansprüche, dadurch **gekennzeichnet**, daß die erste Auswahleinrichtung (MS1) so ausgelegt ist, daß sie zumindest einen Teil des ersten Blocks (BC1) in Unterblöcke mit numerischen Werten unterteilen kann, welche jeweils Bereichen entsprechen, die mindestens zu einer zur zweiten Betrachtungsrichtung (DIR2) parallelen Linie gehören,
und daß die zweite Verarbeitungseinrichtung (MT2) so ausgelegt ist, daß sie die jeweiligen Summierungen der Werte dieser Unterblöcke berechnen und die Verteilung dieser Summen in der Weise analysieren kann, daß die Rangstufe der zweiten Linie daraus ableitbar ist.

6. Vorrichtung nach Anspruch 5, dadurch **gekennzeichnet**, daß in den Fällen, in denen das Verhältnis kleiner als der Bezugswert ist, die erste Auswahleinrichtung (MS1) so ausgelegt ist, daß sie die Gesamtheit des ersten Blocks in die Unterblöcke unterteilen kann, wobei jeder Unterblock Bereichen entspricht, die alle der gleichen Bereichslinie angehören,
und daß die Analyse der Verteilung der Summen zumindest bei bestimmten Unterblöcken Vergleiche der jeweiligen Summen von zwei benachbarten Unterblöcken umfaßt, welche zwei angrenzenden Bereichslinien entsprechen.

7. Vorrichtung nach Anspruch 5, dadurch **gekennzeichnet**, daß in den Fällen, in denen das Verhältnis größer als der Bezugswert oder diesem gleich ist, die erste Auswahleinrichtung (MS1) so ausgelegt ist, daß sie einen ersten zweckmäßigen Abschnitt (PU1) des ersten Blocks in die Unterblöcke unterteilen kann, wobei der erste zweckmäßige Abschnitt einem ersten zweckmäßigen Bezirk der Abbildung (IMA) des Abdrucks entspricht,

daß jeder Unterblock Bereichen entspricht, die zu einer Gruppe von angrenzenden Bereichslinien, bevorzugt drei gehören, während zwei jeweils benachbarte Gruppen von zwei benachbarten Unterblöcken zumindest eine gemeinsame Linie von Bereichen aufweisen,

und daß die Analyse der Verteilung der Summen zumindest für bestimmte Unterblöcke die Bestimmung einer ersten Differenz zwischen den jeweiligen Summen eines ersten Unterblocks und eines zweiten Unterblocks umfaßt, der dem ersten Unterblock benachbart ist, sowie die Bestimmung einer zweiten Differenz zwischen den jeweiligen Summen des zweiten Unterblocks und eines dem zweiten benachbarten dritten Unterblocks, und den anschließenden Vergleich der ersten mit der zweiten Differenz.

8. Vorrichtung nach Anspruch 7, bei welcher die Abbildung (IMA) des Fingerabdrucks einen zentralen Bezirk (RCE) und einen Basalbezirk (RBA) enthält, welcher zwischen dem zentralen Bezirk (RCE) und der Abbiegefalte des den Abdruck tragenden Fingerglieds liegt, dadurch **gekennzeichnet**, daß sich der erste zweckmäßige Bezirk mindestens über einen Teil des Basalbezirks (RBA) und zumindest über einen Teil des zentralen Bezirks (RCE) erstreckt.

9. Vorrichtung nach Anspruch 2 in Verbindung mit einem der Ansprüche 6 bis 8, dadurch **gekennzeichnet**, daß in den Fällen, in denen das Verhältnis kleiner als der Bezugswert ist, die Analyse der Verteilung der Summen auch die Ermittlung der kleinsten Summe umfaßt, während in den Fällen, in denen das Verhältnis größer oder gleich dem Bezugswert ist, die Analyse der Verteilung der Summen auch die Ermittlung der kleinsten Differenz von Summen umfaßt.

10. Vorrichtung nach einem der vorhergehenden Ansprüche, dadurch **gekennzeichnet**, daß die erste Verarbeitungseinrichtung (MT1) folgendes aufweist;

- eine zweite zur Auswahl eines zweiten Blocks numerischer Werte aus der numerischen Wertetabelle (TAB) geeignete Auswahleinrichtung (MS2), wobei die numerischen Werte des zweiten Blocks einer vorgegebenen Anzahl von Bereichslinien aufeinanderfolgender Rangstufen zugeordnet sind, welche zur zweiten Betrachtungsrichtung (DIR2) parallel sind und einem zweiten zweckmäßigen Bezirk des Abdrucks entsprechen, sowie

- eine Hilfsauswahleinrichtung (MSA), die so ausgelegt ist, daß sie für jede Folge numerischer Werte des zweiten Blocks, die einer Folge von Bereichen entsprechen, die einer laufenden, zur ersten Betrachtungseinrichtung (DIR1) parallelen Linie von Bereichen angehört, folgendes auswählen kann:

  * einen oberen Unterblock mit numerischen Werten, die jeweils Bereichen entsprechen, die einer vorgegebenen Anzahl, vorzugsweise zwei, von Linien benachbarter Bereiche angehören, die parallel zur laufenden Linie sind und sich auf der oberen Seite dieser laufenden Linie befinden, und
  * einen unteren Unterblock mit numerischen Werten, die jeweils Bereichen entsprechen, die derselben vorgegebenen Anzahl von Linien benachbarter Bereiche angehören, die parallel zur laufenden Linie sind und sich auf der unteren Seite dieser laufenden Linie befinden,

- eine erste Recheneinrichtung (MC1), mit welcher eine erste Anzahl numerischer Werte des oberen Unterblocks berechenbar ist, welche allgemeinen Ausrichtungen der Papillarlinien (CRT) entsprechen, die alle in einen ersten Quadranten fallen, der durch die beiden Betrachtungsrichtungen begrenzt ist,

- eine zweite Recheneinrichtung (MC2), mit welcher eine zweite Anzahl numerischer Werte des unteren Unterblocks berechenbar ist, welche allgemeinen Ausrichtungen der Papillarlinien (CRT) entsprechen, die alle in einen zum ersten Quadranten bezüglich der zweiten Betrachtungsrichtung (DIR2) symmetrischen zweiten Quadranten fallen, und

- eine dritte Recheneinrichtung (MC3), mit welcher für die laufende Linie das aktuelle Produkt der ersten mit de zweiten Anzahl berechenbar und die beiden jeweiligen aktuellen Produkte der beiden benachbarten laufenden Linien vergleichbar sind.

11. Vorrichtung nach Anspruch 10, bei welcher die Abbildung (IMA) des Abdrucks darüberhinaus einen peripheren Bezirk (RPH) aufweist, der zwischen dem zentralen Bezirk (RCE) und dem Ende des den Abdruck tragenden Fingerglieds liegt, dadurch **gekennzeichnet**, daß sich der zweite zweckmäßige Bezirk zumindest über einen Abschnitt des peripheren Bezirks (RPH) erstreckt.

12. Vorrichtung nach Anspruch 2 in Verbindung mit einem der Ansprüche 10 und 11, dadurch **gekennzeichnet**, daß die dritte Recheneinrichtung (MC3) zur Ermittlung des aktuellen größtmöglichen Produkts ausgelegt ist.

**13.** Vorrichtung nach einem der vorhergehenden Ansprüche, dadurch **gekennzeichnet**, daß jeder Bereich eine Grundanzahl von Elementarzonen umfaßt, die in Abhängigkeit von einem Kriterium für die Umgruppierung gewählt wird, das eine Mindestanzahl von Papillarlinien (CRT) betrifft, die in dem Bereich enthalten sein kann,
und daß jeder Bereich einen Unterbereich umfaßt, der sich mit jedem seiner unmittelbar benachbarten Bereiche schneidet.

**14.** Vorrichtung nach Anspruch 13, dadurch **gekennzeichnet**, daß die Grundanzahl jedes Bereichs für alle Bereiche identisch ist,

und daß die Anzahl von Elementarzonen jedes sich überschneidenden Unterbereichs für alle sich überschneidenden Unterbereiche identisch ist,

und daß die Vorverarbeitungseinrichtung (MPT) so ausgelegt ist, daß sie jeder Untergruppe primärer Daten zu jedem sich überschneidenden Unterbereich einen Zwischenwert zuordnet, der repräsentativ für die allgemeine Ausrichtung, bezogen auf die Betrachtungsrichtungen, der Papillarlinien (CRT) des Abdrucks ist, die in dem entsprechenden sich überschneidenden Unterbereich enthalten sind, und die numerische Wertetabelle (TAB) mit den Zwischenwerten ableitet.

**15.** Vorrichtung nach einem der vorhergehenden Ansprüche, bei welcher die Abbildung (IMA) des Fingerabdrucks einen zentralen Bezirk (RCE), einen Basalbezirk (RBA), der zwischen dem zentralen Bezirk (RCE) und der Biegefalte des den Abdruck tragenden Fingerglieds liegt, sowie einen peripheren Bezirk (RPH) aufweist, der zwischen dem zentralen Bezirk (RCE) und dem Ende des Fingerglieds liegt, dadurch **gekennzeichnet**, daß die dritte Verarbeitungseinrichtung (MT3) so ausgelegt ist, daß sie aus dem speziellen numerischen Wert eine Kombination spezieller primärer Binärdaten ableitet, die einem speziellen Bezirk der Abbildung entsprechen, der innerhalb des zentralen Bezirks (RCE) liegt und den besonderen Bereich enthält, der dem speziellen numerischen Wert zugeordnet ist,
und daß die Vorrichtung des weiteren aufweist:

- einen Speicher (M1), in welchem eine Kombination binärer Bezugsdaten und eine Tabelle numerischer Bezugswerte (TABR) abspeicherbar ist, die einer Bezugsabbildung eines Abdrucks zugeordnet sind,

- eine Nachprüf- und Bestätigungseinrichtung (MTH) einerseits für den Vergleich der Kombination der speziellen Primärdaten mit der Gesamtheit der binären Bezugsdaten, sowie andererseits für den Vergleich der numerischen Wertetabelle (TAB) mit der Tabelle numerischer Bezugswerte (TABR).

**16.** Vorrichtung nach Anspruch 15, dadurch **gekennzeichnet**, daß die Nachprüf- und Bestätigungseinrichtung (MTH) folgendes aufweist:

- eine Korreliereinrichtung (MCR) zur Vornahme mindestens einer Korrelation zwischen der Kombination spezieller Primärdaten und der Gesamtheit der binären Bezugsdaten und zur Ausgabe eines entsprechenden Korrelationskoeffizienten,

- eine vierte Recheneinrichtung (MC4), mit welcher der Abstand zwischen der numerischen Wertetabelle (TAB) und der Tabelle numerischer Bezugswerte (TABR) zur Ausgabe eines entsprechenden Distanzwertes bestimmbar ist, und

- eine Vergleichseinrichtung zur Berechnung eines äquivalenten Koeffizienten, der aus dem Distanzwert und einem vorgegebenen Gesetz ermittelt wird, und zum Vergleichen des Korrelationskoeffizienten und des äquivalenten Koeffizienten zur Nachprüfung und Bestätigung der Abbildung (IMA) des Abdrucks gegenüber der Bezugsabbildung.

**17.** Vorrichtung nach Anspruch 16, dadurch **gekennzeichnet**, daß das vorgegebene Gesetz ein affines Gesetz ist.

**18.** Vorrichtung nach einem der Ansprüche 15 bis 17, dadurch **gekennzeichnet**, daß die Gesamtheit der primären Bezugsdaten einem Bezugs-Unterbezirk entspricht, dessen Oberfläche zumindest gleich der Oberfläche des speziellen Bereichs ist und der aus einem Bezugsbereich gewählt wird, welcher innerhalb des zentralen Bezirks (RCE) der Bezugsabbildung enthalten ist und eine Oberfläche aufweist, die analog zur Oberfläche des speziellen Bezirks ist.

**Claims**

1. Device for processing the image of a fingerprint, consisting of:

   - means of analysis (MAL) suitable for analysing the image (IMA) according to elementary zones and for associating a pixel with each elementary zone,

   - means of conversion (MCV) suitable for grouping together the pixels into groups corresponding respectively to domains (DO) of the image covering several neighbouring elementary zones and forming a partitioning of the image along two orthogonal directions of observation (DIR1, DIR2) and for converting, by comparison with a threshold, each group of pixels into a group of primary binary data,

   - preprocessing means (MPT) suitable for assigning to each group of primary data a numerical value representative of the general orientation of the ridges (CRT) of the print contained in the corresponding domain with respect to the directions of observation, and thus for establishing a table of numerical values (TAB),

   - first processing means (MT1) suitable for determining, within the said partitioning, the rank (nj) of a first row of domains parallel to the first direction of observation (DIR1), and possessing the maximum number of domains whose corresponding numerical values are representative of a general orientation of ridges (CRT) substantially parallel to the second direction of observation (DIR2),

   - second processing means (MT2) suitable for determining, within the said partitioning, the rank (ni) of a second row of domains parallel to the second direction of observation (DIR2), and possessing the maximum number of domains whose corresponding numerical values are representative of a general orientation of ridges (CRT) substantially parallel to the first direction of observation (DIR1), together with

   - third processing means (MT3) suitable for extracting from the said table of numerical values (TAB) the particular numerical value corresponding to the domain (DO(i, j)) belonging both to the said first and second rows (nj, ni),

   characterised in that the second processing means (MT2) comprise:

   a first means for selection (MS1), within the said table of numerical values (TAB), of a first block (BC1) of numerical values associated with a predetermined number of rows of domains of successive ranks parallel to the first direction of observation (DIR1) and including the said first row of domains (nj), and

   means (MY) suitable for establishing a ratio (RT) between, on the one hand, the number of numerical values of the said first block (BC1) corresponding to a general orientation of ridges (CRT) substantially parallel to the second direction of observation (DIR2) and, on the other hand, the number of numerical values of this first block (BC1) corresponding to a general orientation of ridges (CRT) substantially parallel to the first direction of observation (DIR1), and for comparing the said ratio with a predetermined reference value (A), related to a predetermined criterion for the discrimination of two general categories of print, which allows pre-classification of the print thus processed among these two general categories of print.

2. Device according to Claim 1, characterised in that the greatest dimension of the image (IMA) of the print is considered to be substantially parallel to the first direction of observation (DIR1),

   in that the two directions of observation delimit, in one of the two half-planes defined by the first direction of observation (DIR1), two quadrants (QD1, QD2) respectively partitioned into the same number of disjoint angular sectors (SA1-1, ..., SA6-1; SA1-2, ..., SA6-2) associated respectively with distinct numerical values, the preprocessing means (MPT) assigning to each group of primary binary data the numerical value of the angular sector to which the general orientation of the ridges (CRT) of the domain corresponding to the said group of primary binary data belongs,

   in that two angular sectors symmetrical with respect to the second direction of observation (DIR2) are associated respectively with two opposite numerical values,

   and in that the angular sectors of each quadrant are associated respectively with numerical values whose absolute values are ordered in an increasing manner, the numerical value having the smallest absolute value being associated with the angular sector containing the first direction of observation (DIR1), while the numerical value having the greatest absolute value is associated with the angular sector containing the second direction of observation (DIR2).

3. Device according to Claim 1 or 2, in which the image (IMA) of the fingerprint consists of a central region (RCE) and a basal region (RBA) situated between the central region (RCE) and the fold due to the bending of the phalanx supporting the print, characterised in that the criterion for the discrimination of two general categories of print involves the ratio of the greatest dimension of the central region (RCE) to the greatest dimension of the whole print.

4. Device according to Claim 3, characterised in that the first category of prints comprises prints in which the greatest dimension of the central region (RCE) is greater than substantially a third of the greatest dimension of the whole print, while the second category of prints comprises prints in which the greatest dimension of the central region (RCE) is less than or equal to substantially a third of the greatest dimension of the whole print,

in that a print in which the said ratio (RT) is less than the said predetermined reference value (A) belongs to the said first category, while a print in which the said ratio is greater than or equal to the said predetermined reference value belongs to the said second category,

and in that the said predetermined reference value is of the order of several units, preferably equal to five.

5. Device according to one of the preceding claims, characterised in that the first means of selection (MS1) are suitable for subdividing at least a part of the said first block (BC1) into sub-blocks of numerical values corresponding respectively to domains belonging to at least one row parallel to the second direction of observation (DIR2), and in [lacuna] the second processing means (MT2) are suitable for calculating the respective aggregates of the values of these sub-blocks and for analysing the distribution of these aggregates in order to deduce from them the rank of the said second row.

6. Device according to Claim 5, characterised in that, in the case where the said ratio is less than the said reference value, the first means of selection (MS1) are suitable for sub-dividing the whole of the said first block into the said sub-blocks, each sub-block corresponding to domains all belonging to the same domain row, and in that the analysis of the distribution of the aggregates comprises, for at least some of the sub-blocks, comparisons of two respective aggregates of two neighbouring sub-blocks corresponding to two rows of adjacent domains.

7. Device according to Claim 5, characterised in that, in the case where the said ratio is greater than or equal to the said reference value, the first means of selection (MS1) are suitable for sub-dividing a first useful part (PU1) of the said first block into the said sub-blocks, the said first useful part corresponding to a first useful region of the image (IMA) of the print,

and in that each sub-block corresponds to domains belonging to a group of rows of adjacent domains, preferably three, while two respective neighbouring groups of two neighbouring sub-blocks comprise at least one common row of domains,

and in that the analysis of the distribution of aggregates comprises, for at least some of the sub-blocks, the determination of a first difference between the respective aggregates of a first sub-block and a second sub-block, near to the first sub-block, and of a second difference between the respective aggregates of the second sub-block and a third sub-block, near the second sub-block, and then the comparison of the first and second differences.

8. Device according to Claim 7, in which the image (IMA) of the fingerprint consists of a central region (RCE) and a basal region (RBA) situated between the central region (RCE) and the fold due to the bending of the phalanx supporting the print, characterised in that the said useful first region extends over at least part of the basal region (RBA) and over at least part of the central region (RCE).

9. Device according to Claim 2 taken in combination with one of Claims 6 to 8, characterised in that, in the case where the said ratio is less than the said reference value, the analysis of the distribution of the aggregates consists of a search for the minimum aggregate, while in the case where the said ratio is greater than or equal to the said reference value, the analysis of the distribution of the aggregates consists of a search for the minimum difference of aggregates.

10. Device according to one of the preceding claims, characterised in that the first processing means (MT1) comprise:

- second means of selection (MS2) suitable for selecting, within the said table of numerical values (TAB), a second block of numerical values associated with a predetermined number of domain rows of successive ranks parallel to the second direction of observation (DIR2) and corresponding to a second useful region of the print, and

- auxiliary means of selection (MSA) suitable for selecting, for each set of numerical values of the said second block corresponding to a set of domains belonging to a current row of domains parallel to the first direction of observation (DIR1),

  * one upper sub-block of numerical values corresponding respectively to domains belonging to a predetermined number, preferably two, of rows of adjacent domains parallel to the said current row and situated on the upper side of this current row, and
  * one lower sub-block of numerical values corresponding respectively to domains belonging to the same predetermined number of rows of adjacent domains parallel to the said current row and situated on the lower side of this current row,

- first calculating means (MC1) suitable for counting a first number of numerical values of the upper sub-block corresponding to general orientations of ridges (CRT) all belonging to a first quadrant defined by the two directions of observation,

- second calculating means (MC2) suitable for counting a second number of numerical values of the lower sub-block corresponding to general orientations of ridges (CRT) all belonging to the same second quadrant symmetrical with the first quadrant with respect to the second direction of observation (DIR2), and

- third calculating means (MC3) suitable for producing, for the said current row, the current product of the said first and second numbers, and for comparing the two respective current products of two adjacent current rows.

11. Device according to Claim 10, in which the image (IMA) of the print consists in addition of a peripheral region (RPH) situated between the central region (RCE) and the end of the phalanx supporting the print, characterised in that the second useful region extends over at least part of the peripheral region (RPH).

12. Device according to Claim 2 taken in combination with one of Claims 10 and 11, characterised in that the third calculating means (MC3) are suitable for searching for the maximum current product.

13. Device according to one of the preceding claims, characterised in that each domain consists of a basic number of elementary zones chosen as a function of a grouping criterion involving a minimum number of ridges (CRT) capable of being contained in the said domain,
and in that each domain consists of a sub-domain of intersection with each of its immediately neighbouring domains.

14. Device according to Claim 13, characterised in that the basic number of each domain is the same for all domains,

in that the number of elementary zones of each sub-domain of intersection is the same for all the sub-domains of intersection,

and in that the preprocessing means (MPT) are suitable for assigning to each sub-group of primary data of each sub-domain of intersection, an intermediate value representative of the general orientation of ridges (CRT) of the print which are contained in the corresponding sub-domain of intersection with respect to the directions of observation, and for deducing the table of numerical values (TAB) of the said intermediate values.

15. Device according to one of the preceding claims, in which the image (IMA) of the fingerprint consists of a central region (RCE), a basal region (RBA) situated between the central region (RCE) and the fold due to the bending of the phalanx supporting the print and a peripheral region (RPH) situated between the central region (RCE) and the end of the said phalanx, characterised in that the third processing means (MT3) are suitable for deducing from the said particular numerical value a set of specific primary binary data corresponding to a specific region of the image contained inside the central region (RCE) and containing the particular domain associated with the said particular numerical value,
and in that the device also comprises:

- a memory (M1) suitable for containing a set of reference binary data and a table of reference numerical values (TABR) associated with a reference image of the print,

- means of authentication (MTH) suitable for comparing, on the one hand, the set of specific primary data with the set of reference binary data and, on the other hand, the said table of numerical values (TAB) with the table of reference numerical values (TABR).

16. Device according to Claim 15, characterised in that the means of authentication (MTH) consist of:

- correlation means (MCR) suitable for carrying out at least one operation of correlation between the set of specific primary data and the set of reference binary data and for delivering a corresponding correlation coefficient,

- fourth calculating means (MC4) suitable for determining the distance between the said table of numerical values (TAB) and the table of reference numerical values (TABR), for delivering a corresponding distance value, and

- comparison means suitable for calculating an equivalent coefficient derived from the said distance value and a predetermined law, and for comparing the correlation coefficient and the equivalent coefficient for the purposes of authenticating the image (IMA) of the print vis-à-vis the reference image.

17. Device according to Claim 16, characterised in that the said predetermined law is an affine law.

18. Device according to one of Claims 15 to 17, characterised in that the set of reference primary data corresponds to a reference sub-region having a surface area at least equal to that of the said particular domain, and chosen inside a reference region, contained inside the central region (RCE) of the reference image and having a surface area similar to that of the said specific region.

EP 0 478 442 B1

# FIG. 1

FIG.2

FIG.3

256

PX

234

ENV1

ENV2

26

26

Do

## FIG.4

26

i

13

ENV2

DIR1

13

13

26

j

DOI (i,j)

DO

DIR2

## FIG.5

P

DOI (i,j)

q

| p-1,q-1 | p,q-1 | p+1,q-1 |
|---------|-------|---------|
| p-1,q | p,q | p+1,q |
| p-1,q+1 | p,q+1 | p+1,q+1 |

## FIG.6

CFG1 CFG2

FIG.7A

CFG3 CFG4

FIG.7B

CFG5 CFG6

FIG.7C

CFG7 CFG8

FIG.7D

FIG.8

FIG.9

FIG.10

FIG.11

FIG.16

FIG.12

FIG.13

j | i →      VNP    TAB

```
5-7-9  7  7  7  5  5  3 |5  7  7-9-9-9-7-5
 7  9  9  9  7  7  5  5  5|7  7  7  9  9-9-9-7
 9  9  9  9  7  7  5  5  5|7  7  7  9  9  9-9-7
-9-9  9  9  9  9  7  7  5  5|7  7  9  9  9  9-9-9
-9-9  9  9  9  9  7  7  7|7  7  9  9  9  9  9-9
-9-9  9  9  9-9  9  9  7  9 (9) 9  9  9  9  9-9-9
-9  9  9-9-9  9  9  9  9  9  9-9-9-9  9  9-9-9
-9  9  9-9-9-9-9-9-9-9-9-9-9-9-9  9  9-9
 9  9-9  9  9-9-9-9-9-7-7-9-9-9-9-9-9
-9-9-9  9-9-9-9-7-7-5-7-7-9-9-9-9  9
-9-9-9-9  7-9-7  7-5  5-5-7-9-9-9-9-9
-9-9-9-7-9-7-5-5-5  5-5-7-7-9-9-9-9
-9-9-9-9-7-7-5  5  5  5-5-5-7-7-7-7-7
-9-9-9-7-7-5  5-5-5  5-5-5-5-7-5-7-7
-9-9-7-7-5-5  5  5-3-3-5-5-5-5-7  7-7
-9-9-7-7-5-5  5  5-3-3  5-5-3-5-7-7-7
-9-7-7  5  5  5-5-5  5  5  5-5-5-7-7-7
```

### FIG.14B

TAB    IMA

### FIG.14A

j | i →      TAB

```
5  5  5  3  3  3  1  3  3  7  7  7  7  7  7-9-5
5  5  5  3  3  3  3  5  5  7  7  7  9  7  9-9-5
5  5  5  5  3  3  3  3  5  7  7  9  9  7-9  9-7
5  5  5  5  3  3  3  5  5  7  9  7  9  9  9-7
5  5  5  5  3  3  5  5  5  7  7  9  9  9-7-7
5  5  5  5  3  3  5  5  5  5  7  9-9  9  7-9
5  5  5  5  3  3  5  5  5  5  7  7  9-9-9-9-9
5  5  5  5  5  5  5  5  5  7  7  9-9-9-9-9
5  5  5  5  5  3  5  5  5  7  9  9-9  9-9-9
7  5  5  5  3  3  5  5  5  7  9  9  9-9-9-7
9  9  7  7  5  3  3  5  5  5  7  9  9  9-9-7
9  9  9  7 (5) 1  1  3  5  5  5  7  9  9-9-9  7
-9  9  9-7-3-1  1  3  5  5  5  7  9  9-9-9  7
-9-9-7-5-3-1  1  3  3  5  5  7  9-9-9  9  7
-9-7-5-5-3-1  1  1  3  3  5  7  9-9  9  7  7
-7-5-5-5-3-1  1  1  1  3  5  7  9  9  7  7  7
-7-5-5-3-1-1  1  1  1  5  7  9  9  9  5  7-5
```

VNP

### FIG.15B

IMA

### FIG.15A

DO2

DOP

RRF

VNP

## FIG.17A

RRF

DOP

VNP

DO2

## FIG.17 B

RRF

DOP

VNP

## FIG.17C

DO2